(19) Europäisches Patentamt / European Patent Office / Office européen des brevets

(11) **EP 3 183 535 B1**

(12) **EUROPÄISCHE PATENTSCHRIFT**

(45) Veröffentlichungstag und Bekanntmachung des Hinweises auf die Patenterteilung:
**21.02.2024 Patentblatt 2024/08**

(21) Anmeldenummer: **15753035.3**

(22) Anmeldetag: **19.08.2015**

(51) Internationale Patentklassifikation (IPC):
**G01B 11/24** (2006.01)    **G01B 9/02** (2022.01)
**G02B 21/00** (2006.01)    **G01J 9/02** (2006.01)

(52) Gemeinsame Patentklassifikation (CPC):
**G01B 9/02072; G01B 9/02097; G01B 11/2441; G01J 3/45; G01J 9/02**

(86) Internationale Anmeldenummer:
**PCT/EP2015/069089**

(87) Internationale Veröffentlichungsnummer:
**WO 2016/026909 (25.02.2016 Gazette 2016/08)**

(54) **VERFAHREN ZUR REKONSTRUKTION EINES URBILDES MIT EINEM LINSENLOSEN DREIDIMENSIONALEN SELBST-INTERFEROMETER MIT WELLENFRONTINVERSION.**

METHOD OF RECONSTRUCTING AN ORIGINAL IMAGE USING A LENSLESS THREE-DIMENSIONAL SELF-INTERFEROMETER WITH WAVEFRONT INVERSION

PROCÉDÉ DE RECONSTRUCTION D'UNE IMAGE D'ORIGINE, UTILISANT UN INTERFÉROMÈTRE TRIDIMENSIONNEL SANS LENTILLES, AVEC INVERSION DE FRONT D'ONDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2014 DE 102014111979**

(43) Veröffentlichungstag der Anmeldung:
**28.06.2017 Patentblatt 2017/26**

(73) Patentinhaber: **Berz, Martin**
**81675 München (DE)**

(72) Erfinder: **Berz, Martin**
**81675 München (DE)**

(74) Vertreter: **Global IP Europe Patentanwaltskanzlei**
**Pfarrstraße 14**
**80538 München (DE)**

(56) Entgegenhaltungen:
WO-A1-2008/052405    US-A1- 2004 033 426
US-A1- 2006 154 156    US-A1- 2010 231 922
US-B1- 7 154 608

• **WEIGEL D ET AL: "Investigation of the resolution ability of an image inversion interferometer", OPTICS COMMUNICATIONS, ELSEVIER, AMSTERDAM, NL, vol. 284, no. 9, 20 December 2010 (2010-12-20), pages 2273-2277, XP028148606, ISSN: 0030-4018, DOI: 10.1016/J.OPTCOM.2010.12.068 [retrieved on 2011-01-11]**
• **CHATTERJEE S ET AL: "On use of ghost-less beam splitter in reversal shear interferometer for measurement of spatial coherence of large cross-section laser beam", OPTICS AND LASER TECHNOLOGY, ELSEVIER SCIENCE PUBLISHERS BV., AMSTERDAM, NL, vol. 35, no. 2, 1 March 2003 (2003-03-01), pages 133-136, XP004401535, ISSN: 0030-3992, DOI: 10.1016/S0030-3992(02)00164-0**

**Beschreibung**

Die Erfindung betrifft ein Verfahren zur Rekonstruktion eines Urbildes mit einem Interferometer sowie ein Verfahren zur Kalibrierung eines Interferometers. Es kommt ein Interferometer zum Einsatz, das eine interferometrische Bestimmung eines Einfallswinkels eines von einem Bildpunkt eines zu messenden Urbildes emittierten Strahls ermöglicht. Hierbei kann der Einfallwinkel zwischen einer durch den Aufbau gegebenen Achse und einer Geraden, welche durch einen durch den Aufbau bestimmten Referenzpunkt und einen Bildpunkt des zu messenden Urbildes verläuft, gemessen werden.

Unter einem Interferometer wird hierbei jegliche Vorrichtung, jeglicher Aufbau oder jegliche Struktur verstanden, durch welche eine interferometrische Messung ermöglicht wird. Hierbei ist es nicht zwingend notwendig, dass diese Vorrichtung, dieser Aufbau oder diese Struktur bereits eine interferometrische Messung durchführt.

Bekannte Interferometer sind u.a. das Michelson-Interferometer und das Mach-Zehnder-Interferometer. US 8,693,001 B2 und US 7,499,174 B2 offenbaren Verfahren und Vorrichtungen zur linsenlosen Abbildung. Ferner ist aus der internationalen Veröffentlichungsschrift WO 2008/052405 A1 ein Justiersystem für die Ausrichtung lithographischer Masken bekannt, bei dem eine Wellenfront eines Interferometerarms relativ zur Wellenfront des zweiten Interferometerarms invertiert wird um einen Pfadunterschied zwischen den beiden Interferometerarmen zu erzeugen.

Es ist eine Aufgabe der vorliegenden Erfindung, ein Verfahren bereitzustellen, bei dem mit einem Interferometer der oben genannten Art aus einem von einem Urbild linsenlos abgebildetem Bild das entsprechende Urbild rekonstruiert wird. Das Interferometer erzeugt für unterschiedliche Bildpunkte eines zu messenden Urbildes, insbesondere linsenlos, Interferenzmuster, welche eindeutig diesen unterschiedlichen Bildpunkten des zu messenden Urbildes zugeordnet werden können. Hierbei bedeutet eine linsenlose Abbildung insbesondere eine Abbildung, welche lediglich durch ebene, insbesondere perfekt spiegelnde, Oberflächen erfolgt.

Ferner ist es eine Aufgabe der Erfindung, ein Verfahren zur Kalibrierung eines Interferometers anzugeben.

Es ist eine weitere Aufgabe der Erfindung, ein Verfahren bereitzustellen, das es erlaubt, auf Entfernungen größer als 0,1 m, Bildpunkte des berechneten Urbildes auf Basis des durch das Interferometer erzeugten Interferogramms mit hoher Auflösung und besser als optische Standardsysteme aufzulösen.

Der in dem Verfahren verwendete Interferometeraufbau soll ein einfacher Aufbau sein. Ferner soll das für in dem Verfahren verwendete Interferometer kostengünstig hergestellt werden können.

Eine weitere Aufgabe der Erfindung ist es, insbesondere durch Verwendung von strahlaufweitenden Elementen, ein Verfahren bereitzustellen, das insbesondere auf Distanzen kleiner als 10 cm Urbildpunkte linsenlos in der Position auflöst und damit auch in Frequenz-Bereichen einsetzbar ist, für die es keine dielektrischen Linsen gibt, insbesondere im tiefen UV.

Die Aufgaben der Erfindung werden gelöst durch ein Verfahren gemäß Anspruch 1 sowie ein Kalibrierungsverfahren gemäß Anspruch 12. Ein Verfahren zur Rekonstruktion eines Urbildes wird mit einem Interferometer durchgeführt. Das Interferometer weist auf: einen ersten Interferometerarm, und einen zweiten Interferometerarm, wobei der erste Interferometerarm und der zweite Interferometerarm so eingerichtet sind, dass ein von einem zentralen Bildpunkt eines abzubildenden Urbildes ausgehender erster Zentralstrahl den ersten Interferometerarm durchläuft, der von dem zentralen Bildpunkt des abzubildenden Urbildes ausgehender zweiter Zentralstrahl den zweiten Interferometerarm durchläuft, wobei der erste Zentralstrahl und der zweite Zentralstrahl nach Durchlaufen des ersten bzw. zweiten Interferometerarms überlagert werden und an einem Überlagerungspunkt des ersten Zentralstrahls und des zweiten Zentralstrahls eine $k_{senkrecht}=0$-Interferenz erzeugen, ein von einem Bildpunkt des abzubildenden Urbildes ausgehender erster Lichtstrahl den ersten Interferometerarm durchläuft, und ein von dem Bildpunkt des abzubildenden Urbildes ausgehender zweiter Lichtstrahl den zweiten Interferometerarm durchläuft, wobei sich der erste Lichtstrahl und der zweite Lichtstrahl nach Durchlaufen des ersten bzw. zweiten Interferometerarms, an dem Überlagerungspunkt des ersten Zentralstrahls und des zweiten Zentralstrahls überlappen, wobei an dem Überlagerungspunkt eine zum ersten Zentralstrahl senkrechte Wellenvektorkomponente des ersten Lichtstrahls und eine zum zweiten Zentralstrahl senkrechte Wellenvektorkomponente des zweiten Lichtstrahls entgegengesetzt sind.

Die bekannten Interferometer wie zum Beispiel das Michelson-Interferometer oder das Mach-Zehnder-Interferometer sind in der Regel aus Elementen aufgebaut, welche in einer Ebene liegen. Im Gegensatz dazu weist das Interferometer nach der vorliegenden Erfindung bevorzugt Elemente auf, welche nicht in einer Ebene liegen, insofern also eine dreidimensionale Anordnung aufweisen.

Das abzubildende Objekt kann eine dreidimensionale Struktur aufweisen.

In der vorliegenden Erfindung wird die interferometrische Messung durch eine Aufteilung des von dem zu messenden Urbild emittierten Lichts in den ersten bzw. zweiten Interferometerarm und eine anschließende Zusammenführung des Lichts aus den beiden Interferometerarmen an dem Überlagerungspunkt, an welchem zum Beispiel einen Detektor angeordnet sein kann, durchgeführt. Um eine Interferenz messen zu können, muss die optische Weglängendifferenz zwischen den beiden Interferometerarmen kleiner als die entsprechende Kohärenzlänge des verwendeten Lichts sein.

Unter der optischen Weglänge versteht man das Integral des Brechungsindexes entlang der vom Licht zurückgelegten Strecke. Falls der Brechungsindex entlang dieses Weges konstant ist, ist die optische Weglänge gerade gleich dem Produkt aus dem Brechungsindex und der Wegstrecke der zurückgelegten Strecke.

Der Interferometeraufbau weist zwei Interferometerarme auf. Durch diese beiden Interferometerarme verlaufen die beiden Zentralstrahlen, d.h. durch den ersten Interferometerarm verläuft der erste Zentralstrahl und durch den zweiten Interferometerarm verläuft der zweite Zentralstrahl. Der erste Zentralstrahl und der zweite Zentralstrahl werden nach Durchlaufen des jeweiligen Interferometerarms überlagert.

Unter dem Ausdruck, dass die beiden Zentralstrahlen nach Durchlaufen des ersten bzw. zweiten Interferometerarms überlagert werden, kann verstanden werden, dass die Ausbreitungsrichtungen der beiden Zentralstrahlen identisch sind und beide Zentralstrahlen durch einen gemeinsamen Punkt, im vorliegenden Falle den Überlagerungspunkt, verlaufen.

Bei der Überlagerung des erster Zentralstrahls und des zweiten Zentralstrahls ergibt sich eine Vielzahl von Überlagerungspunkten beginnend vom ersten Punkt, an dem der erste Zentralstrahl und der zweite Zentralstrahl überlagert sind. Zur Beobachtung einer Interferenz sind alle diese Überlagerungspunkte gleichwertig, solange die Kohärenzbedingung erfüllt ist, das heißt solange ausgehend vom abzubildenden Bildpunkt der Unterschied der beiden optischen Pfade durch den ersten und zweiten Interferometerarm kleiner als die Kohärenzlänge des verwendeten Lichts ist.

Die Lage eines zentralen Bildpunkts eines abzubildenden Urbildes kann zum Beispiel bei vorgegebenen Interferometerarmen so definiert sein, dass die beiden Zentralstrahlen nach Durchlaufen der jeweiligen Interferometerarme an einem Überlagerungspunkt der Zentralstrahlen eine $k_{senkrecht}=0$-Interferenz erzeugen.

Für ebene Wellen kann unter einer $k_{senkrecht}=0$-Interferenz eine Interferenz zwischen zwei Lichtstrahlen verstanden werden, bei der die Wellenvektoren der beiden interferierenden Lichtstrahlen dieselbe Richtung aufweisen, insbesondere identisch sind. Eine $k_{senkrecht}=0$-Interferenz ist somit eine Interferenz zwischen zwei Lichtstrahlen, bei der eine senkrechte Wellenvektorkomponente fehlt und somit gleich Null ist. Für den Fall, dass ein Detektor mit einer ebenen Detektionsfläche diese $k_{senkrecht}=0$-Interferenz detektiert, und die Wellenvektoren der interferierenden Lichtstrahlen senkrecht auf der Detektionsfläche stehen, weist jeder Punkt der gesamten Detektionsfläche eine identische Intensität auf. Die Detektionsfläche weist somit kein typisches Interferenzmuster auf, bei dem die Intensität typischerweise sinusförmig variiert. Die $k_{senkrecht}=0$-Interferenz ist trotzdem eine Interferenz, da bei Variation des optischen Pfades eines der beiden Zentralstrahlen die Intensität auf der gesamten Detektionsfläche sinusförmig variiert.

Für Kugelwellen kann man allgemeiner formulieren, dass unter einer $k_{senkrecht}=0$-Interferenz eine Interferenz verstanden werden kann, bei der die interferierenden Strahlen parallele Wellenfronten haben.

Während die beiden Zentralstrahlen am Überlagerungspunkt überlagert sind, sind die beiden Lichtstrahlen, die von einem Bildpunkt des abzubildenden Urbilds ausgehen und durch die beiden Interferometerarme laufen, am Überlagerungspunkt überlappt. Dies bedeutet, dass die Ausbreitungsrichtungen des ersten und zweiten Lichtstrahls im Allgemeinen nicht identisch sind. In der Praxis bedeutet das in der Regel eine Überlappung der Strahlprofile des ersten und zweiten Lichtstrahls. Falls die Differenz der jeweiligen optischen Pfade kleiner als die Kohärenzlänge ist, sieht man in diesem Fall typische Interferenzstreifen.

Die Tatsache, dass an dem Überlagerungspunkt eine zum ersten Zentralstrahl senkrechte Wellenvektorkomponente des ersten Lichtstrahls und eine zum zweiten Zentralstrahl senkrechte Wellenvektorkomponente des zweiten Lichtstrahls entgegengesetzt sind, kann als eine zentrale Erkenntnis der vorliegenden Erfindung angesehen werden. Hierbei ist eine zum ersten Zentralstrahl senkrechte Wellenvektorkomponente jede beliebige Komponente, solange die Komponente senkrecht zum ersten Zentralstrahl ist. Die zum ersten Zentralstrahl senkrechte Wellenvektorkomponente des ersten Lichtstrahls ist die gesamte senkrechte Wellenvektorkomponente, so dass die Vektorsumme der zum ersten Zentralstrahl senkrechten Wellenvektorkomponente des ersten Lichtstrahls und der zum ersten Zentralstrahl parallelen Wellenvektorkomponente des ersten Lichtstrahls gleich dem Wellenvektor ist. Für den zweiten Zentralstrahl gilt dies entsprechend.

Es gilt, dass die Richtung der zum ersten Zentralstrahl senkrechten Wellenvektorkomponente und die Richtung der zum zweiten Zentralstrahl senkrechten Wellenvektorkomponente entgegengesetzt sind. Dadurch erhält man für beliebige Bildpunkte des abzubildenden Urbildes ein Interferenzmuster. Bevorzugt sind der Betrag der zum ersten Zentralstrahl senkrechten Wellenvektorkomponente und der Betrag der der zum zweiten Zentralstrahl senkrechten Wellenvektorkomponente an dem Überlagerungspunkt gleich groß. Dies hat den Vorteil, dass die bei der Überlagerung der beiden Zentralstrahlen entstehende $k_{senkrecht}=0$-Interferenz einen größeren, insbesondere maximalen, Interferenzkontrast aufweist.

Ausgehend vom zentralen Bildpunkt gilt für jede zweidimensionale Abweichung senkrecht zur optischen Achse, dass an dem Überlagerungspunkt die zum ersten Zentralstrahl senkrechte Wellenvektorkomponente des ersten Lichtstrahls und die zum zweiten Zentralstrahl senkrechte Wellenvektorkomponente des zweiten Lichtstrahls entgegengesetzt, bevorzugt entgegengesetzt gleich groß, sind. Dies lässt sich in der Regel nur durch einen dreidimensionalen Interferometeraufbau erzielen.

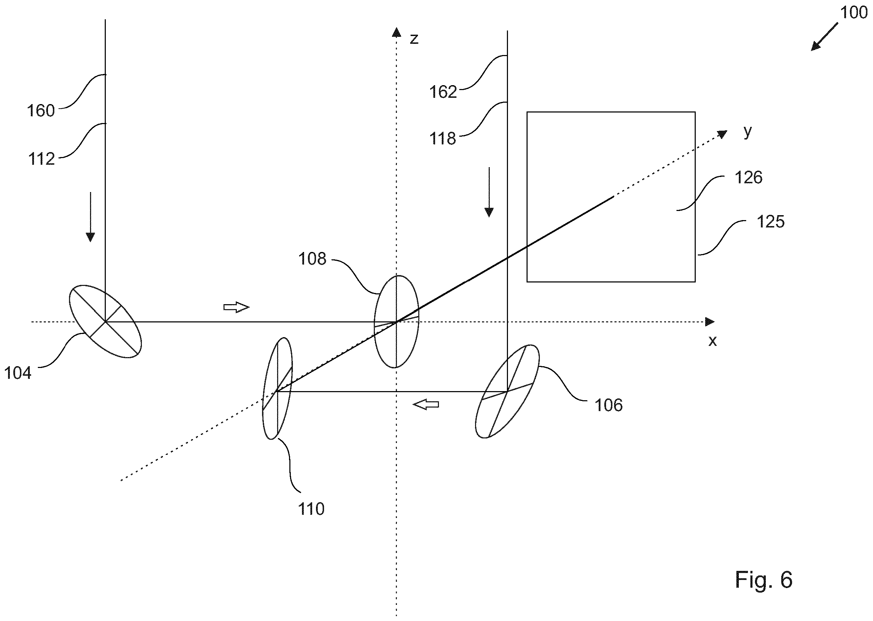

Die oben angesprochene Tatsache, welche als eine zentrale Erkenntnis der vorliegenden Erfindung angesehen werden kann, kann an Figur 6 gut demonstriert werden.

In Figur 6 verlaufen der erste Zentralstrahl 112 und der zweite Zentralstrahl 118, welche beide vom zentralen Bildpunkt 154 emittiert sind, entlang der negativen z-Achse und treffen jeweils auf ein erstes Strahlumlenkelement 104 und ein zweites Strahlumlenkelement 106. Der erste Zentralstrahl 112 wird vom ersten Strahlumlenkelement 104 in die Richtung der x-Achse gelenkt und der zweite Zentralstrahl 118 wird vom zweiten Strahlumlenkelement 106 in die Richtung der negativen x-Achse gelenkt.

Die Anordnung der Achsen ist in Figur 6 und in allen anderen Ausführungsbeispielen dieser Erfindung willkürlich gewählt und nicht beschränkend.

Vorliegend sind der erste Zentralstrahl 112 und der zweite Zentralstrahl 118 jeweils parallel zur z-Achse eingezeichnet. Dies bedeutet, dass das abzubildende Objekt 156 im Unendlichen liegt.

Nachfolgend wird der erste Zentralstrahl 112 vom dritte Strahlumlenkelement 108, welches am Ursprung des hier gewählten Koordinatensystems liegt, in die Richtung der y-Achse umgelenkt, woraufhin der erste Zentralstrahl 112 auf einen Detektor 125 mit einer Detektionsebene 126 trifft. Der Detektor 125 kann vorzugsweise einen CCD-Sensor oder einen CMOS-Sensor bzw. einen aktiven Pixelsensor (engl.: active-pixel sensor (APS)) aufweisen. Bevorzugt weist der Detektor 125 zweidimensionale Anordnungen bzw. Arrays der oben genannten Sensoren auf.

Der zweite Zentralstrahl 118 wird, nachdem er vom zweiten Strahlumlenkelement 106 in Richtung der negativen x-Achse abgelenkt wurde, vom vierten Strahlumlenkelement 110 ebenfalls wie der erste Zentralstrahl 112 in Richtung der y-Achse abgelenkt. Da das dritte Strahlumlenkelement 108 als halbdurchlässiger Spiegel ausgestaltet ist, können somit der erste Zentralstrahl 112 und der zweite Zentralstrahl 118 vom vierte Strahlumlenkelement 110 kommend gesehen hinter dem dritte Strahlumlenkelement 108 überlagert werden. Der Überlagerungspunkt 157 befindet sich somit auf dem dritten Strahlumlenkelement 108 oder auf der Halbgeraden hinter dem dritten Strahlumlenkelement 108 auf einer beliebigen Position der y-Achse.

Eine kleine Abweichung der Ausbreitungsrichtung des ersten Zentralstrahls 112 bzw. des zweiten Zentralstrahls 118 von der negativen z-Achse weg entlang der xy-Ebene führt nach den Reflexionen an den vier Strahlumlenkelementen dazu, dass der erste Zentralstrahl 112 sich im Wesentlichen entlang der y-Achse ausbreitet, jedoch auch eine kleine Komponente in der xz-Ebene aufweist und der zweite Zentralstrahl 118 sich ebenfalls im Wesentlichen entlang der y-Achse ausbreitet und ebenfalls eine kleine Komponente in der xz-Ebene aufweist, welche jedoch genau entgegengesetzt zur entsprechenden Komponente 164 des ersten Zentralstrahls 112 ist. Man kann somit sagen, dass die senkrechte Wellenvektorkomponente des ersten Zentralstrahls 112 am Überlagerungspunkt 157 genau entgegengesetzt gleich groß ist wie die entsprechende senkrechte Wellenvektorkomponente 166 des zweiten Zentralstrahls 118. Diese Eigenschaft der Erfindung führt dazu, dass jeder Bildpunkt des abzubildenden Urbilds bis auf gewisse Symmetrien ein unterschiedliches Interferenzmuster auf den Detektor erzeugt. Die erwähnten Symmetrien können durch eine Variation des optischen Weges eines Interferometerarms ausgeschlossen werden. Somit ist es möglich, jeden Bildpunkt des abzubildenden Urbilds eindeutig zu identifizieren und somit die Relativposition jedes Bildpunkts des abzubildenden Urbilds relativ zum verwendeten Interferometer eindeutig festzulegen. Es scheint, dass diese Eigenschaft nur mit einem Interferometer möglich ist, welches eine dreidimensionale Struktur aufweist.

Bemerkenswert ist, dass die oben angesprochene Tatsache, welche als eine zentrale Erkenntnis der vorliegenden Erfindung angesehen werden kann, auch für abzubildende Urbilder gilt, welche nicht im Unendlichen liegen. In diesem Fall sind die beiden Zentralstrahlen nicht parallel zueinander, sondern im Allgemeinen divergent. Wenn die optische Achse als die Winkelhalbierende zwischen dem ersten Zentralstrahl 112 und dem zweiten Zentralstrahl 118 definiert ist, setzt dies keine parallelen Zentralstrahlen voraus. Die Anordnungsebene ist in diesem Fall ebenfalls wohldefiniert, sie kann nämlich als eine zur optischen Achse senkrechte Ebene definiert werden. Lichtstrahl ist ein Begriff der geometrischen Optik und unabhängig davon definiert, ob ein Objekt im Unendlichen liegt oder nicht. Über mehrere Lichtstrahlen kann nach den Regeln der geometrischen Optik die Wellenfront bestimmt werden. Es ist diejenige Fläche, die normal zur Richtung des jeweiligen Lichtstrahls steht. Für ein Urbild mit endlichem Abstand zum Interferometer ergibt diese Konstruktion kugelförmige, d.h. gekrümmte Wellenfronten. Bei der vorliegenden Erfindung wirkt sich die Krümmung der Wellenfronten in beiden Interferometerarmen aus, wobei sich die Auswirkungen der Wellenfrontkrümmung auf das interferometrische Muster näherungsweise aufheben. Somit kann trotz Wellenfrontkrümmung auch für Objekte im endlichen Abstand ein von der Position des Urbildpunktes abhängiges Interferogramm gemessen werden. Die Differenz der senkrechten Wellenvektorkomponente ist definiert als Differenz zwischen der senkrechten Wellenvektorkomponente des ersten Lichtstrahls relativ zum ersten Zentralstrahl und der senkrechten Wellenvektorkomponente des zweiten Lichtstrahls relativ zum zweiten Zentralstrahl. Diese Definition ist wohldefiniert und unabhängig davon, ob das Objekt im Endlichen oder Unendlichen liegt. Diese Unabhängigkeit vom Objektabstand konnte experimentell nachgewiesen werden. Diese Erkenntnis ist eine wichtige Erkenntnis der Erfindung.

Ein wesentlicher Vorteil der Erfindung liegt darin, dass ein Urbild abgebildet und mit dem nachstehend beschriebenen Verfahren rekonstruiert werden kann, wobei lediglich ebene spiegelnde Elemente verwendet werden. Dies ermöglicht eine preiswerte und leichte Bauweise der vorliegenden Vorrichtung. Die Vorrichtung ist somit geeignet, abbildende Elemente wie zum Beispiel Linsen oder dielektrische Medien zu vermeiden. Ferner ermöglicht dies eine Anwendung in Wellenlängenbereichen, in denen es mangels verfügbarer transparenter Medien keine Linsen gibt, wie z.B. im tiefen UV.

Bevorzugt ist die Differenz der Lichtstrahl-Reflexionen im ersten Interferometerarm und der Lichtstrahl-Reflexionen im zweiten Interferometerarm eine gerade Zahl. Dies bedeutet, dass die Anzahl der Reflexionen in jedem Interferometerarm entweder gerade oder ungerade ist. Hierbei ist eine Reflexion an einem D-Spiegel (zur Begriffserläuterung D-Spiegel siehe DE 10 2013 101 856.4) auch als eine Reflexion zu zählen.

Die Abbildung durch einen Spiegel kann für den nichteinschränkenden Fall, dass das Koordinatensystem so gewählt ist, dass die z-Achse entlang der Flächennormalen des Spiegels liegt, wie folgt ausgedrückt werden:

$$(k_x, k_y, k_z) \rightarrow (k_x, k_y, -k_z),$$

wobei $k_x$, $k_y$ und $k_z$ die Komponenten des Wellenvektors k eines auf den Spiegel einfallenden Lichtstrahls sind. Diese Abbildungseigenschaft eines Spiegels kann nicht durch eine oder mehrere verknüpfte Drehungen erreicht werden, da ein Spiegel den Drehsinn einer Kreisbewegung ändert. Beispielsweise wird links zirkular polarisiertes Licht nach Reflexion an einem Spiel zu rechts zirkular polarisiertem Licht. Diese bevorzugte Eigenschaft hinsichtlich der Anzahl der Reflexionen bedeutet somit, dass die optische Abbildung über den ersten Interferometerarm und die optische Abbildung über den zweiten Interferometerarm entweder in beiden Armen zu einer Umkehr des Drehsinns führt oder in beiden Armen zu einem Erhalt des Drehsinns führt. Im Erhalt des Drehsinns gibt es somit keinen Unterschied zwischen dem ersten Interferometerarm und dem zweiten Interferometerarm. Diese Eigenschaft wird im Folgenden als "Erhalt des relativen Drehsinns" bezeichnet.

Das Entstehen eines von der Lage des Urbildpunktes abhängigen Interferogramms setzt voraus, dass es einen lageabhängigen Unterschied zwischen dem ersten Interferometerarm und dem zweiten Interferometerarm gibt. Ohne auf eine bestimmte Theorie festgelegt zu sein, ist zu vermuten, dass der Effekt eines lageabhängigen Unterschieds für einen Interferometeraufbau, wo die Zentralstrahlen und die Anordnungsebene in derselben zweidimensionalen Ebene liegen, nicht bei gleichzeitigem Erhalt des relativen Drehsinns möglich ist. Der Grund ist u.a. in der Eigenschaft zu suchen, dass Drehungen in zwei Dimensionen vertauschen, d.h. eine kommutative Gruppe bilden. Da es gemäß Voraussetzung auch keinen Unterschied zwischen den Interferometerarmen beim Erhalt des Drehsinns gibt, verbleibt keine Eigenschaft, die zum Entstehen eines von der Lage des Urbildpunktes abhängigen Interferogramms führen könnte. Der erste Zentralstrahl, welcher durch den ersten Interferometerarm läuft, hat am Überlagerungspunkt den gleichen Wellenvektor wie der zweite Zentralstrahl, der durch den zweiten Interferometerarm läuft. Dies bedeutet, dass die Abbildung des Urbildpunktes für diese Raumrichtung festgelegt ist und für eine Verschiebung des Urbildpunktes vom zentralen Bildpunkt weg nur zu einer Veränderung mit gleichem Vorzeichen der Wellenvektoren im ersten Interferometerarm und den zweiten Interferometerarm führen kann. Eine Veränderung mit unterschiedlichem Vorzeichen, wie von der vorliegenden Erfindung gefordert, würde für ein Interferometer in zwei Dimensionen bedeuten, dass die Abbildungen durch die beiden Interferometerarme ein unterschiedliches Ergebnis für den Erhalt des Drehsinns liefern würden. Ein von der Lage des Urbildpunktes abhängiges Interferogramm ist somit, unter der Voraussetzung des Erhalts des Drehsinns für ein zweidimensionales Interferometer, nicht möglich.

Dahingegen haben Drehungen in drei Dimensionen diese Eigenschaft der Vertauschbarkeit nicht. Gegenstand der vorliegenden Erfindung sind daher dreidimensionale Interferometer. Unter dreidimensionalen Interferometern bzw. Interferometer mit einem dreidimensionalen Aufbau werden Interferometer verstanden, bei denen die Zentralstrahlen nicht, insbesondere auch nicht näherungsweise, in der Anordnungsebene des Interferometers liegen. Unter zweidimensionalen Interferometern bzw. Interferometer mit einem zweidimensionalen Aufbau werden Interferometer verstanden, bei denen die Zentralstrahlen und die Komponenten des Interferometers in einer Ebene liegen.

Wird bei einem Interferometer in einem der Interferometerarme eine zusätzliche Reflexion, z.B. durch einen zusätzlichen Spiegel eingeführt, dann hat dieses neue Interferometer die gewünschte Eigenschaft der entgegengesetzten Wellenvektorkomponenten für eine Raumrichtung nicht mehr, nämlich für die Raumrichtung, die durch den Spiegel gespiegelt wurde. Der Grund dafür ist, dass das Interferometer vorher für diese Richtung diese Eigenschaft hatte und sie durch den Spiegel verliert.

Als zusätzliche Eigenschaft kann gefordert werden, dass die Abbildungseigenschaften des ersten Strahlumlenkelements und des zweiten Strahlumlenkelements durch eine Rotation um einen Winkel von 150° bis 210°, besonders bevorzugt um 180°, überführt werden. Die Rotation erfolgt hierzu bevorzugt um eine Drehachse, die abgesehen von einer Translation mit der optischen Achse einen Winkel kleiner als 30°, bevorzugt kleiner als 20° oder besonders bevorzugt kleiner als 10° bildet. Die optische Achse kann hierbei ausgehend vom zentralen Bildpunkt als die Winkelhalbierende zwischen dem ersten und dem zweiten Zentralstrahl definiert sein. Die für die Interferenz erforderliche Überlappung erfolgt in einem Interferometer in einem Punkt, der näherungsweise in der Anordnungsebene liegt. Die Anordnungsebene kann hierbei als die Ebene definiert sein, die normal zur optischen Achse liegt und in der das erste Strahlumlenkelement liegt.

Die beschriebene Klassifikation von Interferometern kann wie folgt vervollständigt werden: Ein zweidimensionales Interferometer mit Erhalt des relativen Drehsinns hat, wie voranstehend ausgeführt, die Eigenschaften der Erfindung nicht. Wird bei einem derartigen Interferometer nun ein zusätzlicher Spiegel in einem der Interferometerarme eingeführt, so tritt für diese Richtung die Eigenschaft entgegengesetzter senkrechter Wellenvektorkomponenten gerade auf. Dies tritt aber nur für die Richtung auf, die durch den Spiegel gespiegelt wurde, nicht für die hierzu orthogonalen Richtungen. Es wird daher vermutet, dass aus einem zweidimensionalen Interferometer auch durch Einführung eines zusätzlichen Spiegels kein Interferometer gestaltet werden kann, das die Eigenschaften der Erfindung hat.

Ferner wird die Aufgabe der Erfindung durch ein Verfahren zur Rekonstruktion eines Urbildes aus einem mit einem Interferometer gemessenen Bild sowie durch ein Verfahren zur Kalibrierung eines Interferometers gelöst. Das Verfahren zur Kalibrierung eines Interferometers dient dem Zweck der Durchführung des Verfahrens zur Rekonstruktion eines Urbilds aus einem mit einem Interferometer gemessenen Bild. Insofern lösen beide Verfahren dieselbe Aufgabe.

Ein Urbild wird hierbei als aus Bildpunkten zusammengesetzt angenommen, wobei die Urbild-Punkte dem Auflösungsvermögen der Vorrichtung entsprechen. Da die verschiedenen Urbild-Punkte zu unterschiedlichen Interferogrammen führen, wird mit dem Verfahren sichergestellt, dass im Rahmen des Auflösungsvermögens eine Intensitätsverteilung der Urbildpunkte berechnet wird, die bei Abbildung durch die Vorrichtung das gemessene überlagerte Interferogramm ergibt ("Lösung des inversen Problems"). Im Rahmen des Auflösungsvermögens entspricht hierbei die berechnete Intensitätsverteilung den tatsächlichen Intensitäten der Urbildpunkte. Dieses Verfahren erlaubt eine Auflösung eines Raumkegels um den zentralen Bildpunkt, wobei für eine feste Urbildpunkt-Richtung das Interferogramm nicht vom Abstand des Urbildpunktes auf dem Strahl abhängt. Das erfindungsgemäße Verfahren rekonstruiert das Urbild, ohne dass eine Entfernungsbestimmung erforderlich wäre. Entfernungsmessungen sind jedoch ebenfalls möglich, allerdings nur durch Triangulation.

Bei dem Verfahren zur Kalibrierung eines Interferometers, werden für mindestens eine optischen Weglängendifferenz $\delta t$ zwischen erstem Interferometerarm und zweitem Interferometerarm und für mindestens eine Wellenlänge $\lambda_s$, die von einem Urbild emittiert wird, nachfolgende Schritte durchgeführt: Erstellen einer Pixel-Rasterung (i, j) für das Urbild, Erstellen einer Pixel-Rasterung (m, n) für ein Bild, nacheinander Erzeugen eines leuchtenden Pixels der Pixel-Rasterung des Urbilds mit einer Norm-Intensität, wobei die restlichen Pixel dunkel sind, für jeden einzelnen Pixel der Pixel-Rasterung des abzubildenden Urbilds, und für jeden leuchtenden Pixel der Pixel-Rasterung des Urbilds Erfassen von Intensitäten ($\varphi_{m,n,t}(i,j,s)$) der Pixel-Rasterung (m, n) des Bilds.

Die Kalibrierung des Interferometers ist demnach nicht ausschließlich durch das Interferometer selbst bestimmt, sondern hängt auch vom Urbild bzw. Bild ab, insbesondere von der zu messenden Wellenlänge oder den zu messenden Wellenlängen und dem gewählten Bildausschnitt.

Das Verfahren kann hinsichtlich der Wellenlängen auf zwei unterschiedliche Arten durchgeführt werden. Nach der ersten Durchführungsart wird das Verfahren für mindestens eine Wellenlänge, die vom Urbild emittiert wird, durchgeführt. Nach der zweiten Durchführungsart wird das Verfahren für mindestens eine Wellenlänge, die vom Bild emittiert wird, durchgeführt. Die zweite Durchführungsart wird bevorzugt durchgeführt, wenn das Bild selbst gar nicht oder nur schlecht verfügbar ist.

Die Weglängendifferenz zwischen dem erstem Interferometerarm und zweitem Interferometerarm wird mit $\delta$ bezeichnet. Diese Weglängendifferenz kann vorzugsweise variiert werden, indem man in einen der beiden Interferometerarme eine Vorrichtung einfügt, die den optischen Weg verändert. Dies kann bevorzugt durch sich drehende optische Platten, Vorrichtungen, die den elektrooptischen Effekt benutzen, wie z.B. einer Pockelszelle, einen elektrooptischen Modulator, einer Kerr-Zelle oder Ähnliches realisiert werden. Falls das hier beschriebene Verfahren für mehrere Weglängendifferenzen durchgeführt wird, wird die Vielzahl von benutzen Weglängendifferenzen mit $\delta_t$ bezeichnet, wobei t ein Index ist. Falls die verwendeten Weglängendifferenzen äquidistant sind, kann $\delta t$ dargestellt werden als $\delta_t = t*\Delta\delta$, wobei $\Delta\delta$ eine Konstante ist.

Die verwendete Lichtwellenlänge wird mit $\lambda$ bezeichnet. Falls das hier beschriebene Verfahren für mehrere Wellenlängen durchgeführt wird, wird die Vielzahl der verwendeten Wellenlängen mit $\lambda_s$ bezeichnet, wobei s ein Index ist. Falls die verwendeten Wellenlängen äquidistant sind, kann $\lambda_s$ dargestellt werden als $\lambda_s = s*\Delta\lambda$, wobei $\Delta\lambda$ eine Konstante ist. Falls das abzubildende Objekt mehrere Wellenlängen emittiert, kann das Verfahren für diese Wellenlängen, also für sämtliche emittierten Wellenlängen, durchgeführt werden. Das Verfahren kann aber auch nur für einen Teil der von dem abzubildenden Objekt emittierten Wellenlängen durchgeführt werden.

Falls das abzubildende Objekt ein kontinuierliches Spektrum hat, können gewisse Wellenlängen ausgewählt werden. Dies kann zum Beispiel so geschehen, dass die kleinste und größte Wellenlänge sowie eine gewisse Anzahl an Wellenlängen zwischen diesen beiden für das Verfahren verwendet werden. Die Wellenlängen zwischen der kleinsten und größten Wellenlänge können zum Beispiel äquidistant gewählt werden.

Die Auswahl kann bevorzugt auch so geschehen, dass so viele Wellenlängen ausgewählt werden, so dass das zu lösende Gleichungssystem, welches untenstehend beschrieben wird, lösbar, insbesondere, dass das Interferenzmuster für dazwischenliegende Wellenlängen interpolierbar ist.

Für den extremen Fall einer weißen Lichtemission kann bei einer Auflösung des Urbildes von N x N Pixelpunkten eine Weglängenvariation $\delta_t$ von N/2 Wellenlängen gewählt werden, wobei N eine ganze Zahl größer als 1 ist. Z.B. kann bei einer Auflösung des Urbildes von 1000 x 1000 Pixelpunkten eine Weglängenvariation $\delta_t$ von 500 Wellenlängen gewählt werden. D.h. mit der Zentralwellenlänge $\lambda_{zentral}$ ergibt sich $\Delta\delta$ = 0,5 * $\lambda_{zentral}$, $\delta_t$=t*$\Delta\delta$, und t läuft von 0 bis N, z.B. für den oben genannten speziellen Fall bis 1000. Durch diese Wahl wird das Urbild orts- und frequenzaufgelöst aufgenommen, was im Fachjargon auch "spectral hypercube" genannt wird.

Die Pixel-Rasterung (i, j) für das abzubildende Urbild kann folgendermaßen erstellt werden. Man wählt z.B. den zentralen Bildpunkt als Ursprung des Koordinatensystems der Pixel-Rasterung. Als Ebene, in der das Koordinatensystem der Pixel-Rasterung verlaufen soll, kann z.B. eine Ebene gewählt werden, welche im Wesentlichen senkrecht zu einer Verbindungslinie zwischen dem Urbild und dem Interferometer verläuft. Hier kann z.B. die Verbindungslinie ausgehend vom zentralen Bildpunkt als die Winkelhalbierende zwischen dem ersten Zentralstrahl und den zweiten Zentralstrahl gewählt werden. Als Achsen des Koordinatensystems können zwei beliebige zueinander senkrechte Achsen gewählt werden, die in dieser Ebene verlaufen. In dem o.g. Koordinatensystem hat dann jeder Punkt auf der Pixel-Rasterung eine x-Koordinate der Form i*$\Delta x_u$ und eine x-Koordinate der Form j*$\Delta y_u$. Die Größen $\Delta x_u$ und $\Delta y_u$ sind die Schrittweiten der gewählten Rasterung. Die Indizes i und j stehen stellvertretend für diese so gewählte Rasterung.

Die Rasterung kann z.B. so gewählt werden, dass diese dem Auflösungsvermögen des Interferometers entspricht. Das Auflösungsvermögen ist ausgehend vom zentralen Bildpunkt dadurch gegeben, dass ein Bildpunkt dann vom zentralen Bildpunkt unterschieden werden kann, wenn das komplette Interferenzmuster im Rahmen der Verschiebung der Urbildpunkte eine destruktive und eine konstruktive Interferenz ausbildet. Das heißt auf dem mit (m, n) gerasterten Bild entsteht für einen Teilbereich eine konstruktive und für einen anderen Teilbereich eine destruktive Interferenz. Dazwischen liegt eine sogenannte "Knotenlinie", wo die Interferenz von destruktiv zu konstruktiv wechselt. Der zentrale Bildpunkt stellt eine $k_{senkrecht}$=0-Interferenz dar, d.h. er hat diese Eigenschaft nicht. Die kleinste Verschiebung, die diese Eigenschaft zum ersten Mal ausbildet, bestimmt die optische Auflösung. Bevorzugt setzt man das gleich mit $\Delta x_u$ und $\Delta y_u$.

Die Pixel-Rasterung (m, n) für das zu messende Bild kann folgendermaßen erstellt werden. Das zu messende Bild kann z.B. auf einem Detektor gemessen werden. Die Detektorfläche kann z.B. eben sein. Ein in der Mitte dieser Detektorfläche liegender Punkt kann als Ursprung des Koordinatensystems der Pixel-Rasterung für das zu messende Bild gewählt werden. Als Ebene, in der das Koordinatensystem der Pixel-Rasterung verlaufen soll, kann z.B. die Ebene gewählt werden, in der die Detektorfläche liegt oder, falls nicht identisch, eine Ebene, die senkrecht zu den beiden überlagerten Zentralstrahlen ist. Als Achsen des Koordinatensystems können zwei beliebige zueinander senkrechte Achsen gewählt werden, die in dieser Ebene verlaufen. In dem o.g. Koordinatensystem hat dann jeder Punkt auf der Pixel-Rasterung eine x-Koordinate der Form m*$\Delta x$ und eine x-Koordinate der Form n*$\Delta y$. Die Größen $\Delta x$ und $\Delta y$ sind die Schrittweiten der gewählten Rasterung. Die Indizes m und n stehen stellvertretend für diese so gewählte Rasterung. Bevorzugt werden die Größen $\Delta x$ und $\Delta y$ so gewählt, dass die Rasterung eine mindestens gleich große oder auch größere Pixelanzahl als im Urbildraum ergibt, was im Fachjargon auch "Oversampling" genannt wird.

Mit den beiden Rasterungen des Urbildes und des Bildes wird für jedes Pixel der Urbildrasterung, welches mit einer Standardintensität emittiert, ermittelt wie die Intensitätsverteilung $\varphi_{m,n,t}(i,j,s)$ auf jedem Pixel der Rasterung des Bildes ist. Hierbei stehen die Indizes i, j als Parameter für die Rasterung des Urbildes und s für die Indizierung oder Rasterung der Wellenlänge. Für unterschiedliche i, j und s erhält man unterschiedliche Intensitätsverteilungen auf der Detektorfläche.

Die Intensitäten $I_{i,j,s}$ geben für jeden Rasterpunkt auf dem Urbild dessen Intensität bei der Wellenlänge mit dem Index s an. Falls die Rasterungen des Urbildes und des Bildes und die Indizierung der Wellenlängen fein genug sind, gilt somit exakt, dass die Summe über alle Indizes i, j und s des Produktes des Interferogramms bei Standardintensität $\varphi_{m,n,t}(i,j,s)$ mit der jeweiligen Intensität des Pixels (i,j) bei der Wellenlänge mit Index s, welche als $I_{i,j,s}$ bezeichnet wird, gleich der gemessenen Intensitätsverteilung an den Pixeln m, n der Pixel-Rasterung (m, n) für das zu messende Bild, welche als $\Phi_{m,n,t}$ bezeichnet wird, ist:

$$\sum_{i,j,s} I_{i,j,s} \cdot \varphi_{m,n,t}(i,j,s) = \Phi_{m,n,t}$$

Hierbei ist $\Phi_{m,n,t}$ die gemessene Intensitätsverteilung an den Pixeln m, n der Pixel-Rasterung (m, n) für das zu messende Bild. Diese Gleichung wird Abbildungsgleichung genannt.

Durch eine Invertierung der aus den Zeilen m, n, und t und den Spalten i, j und s bestehenden Matrix $\varphi_{m,n,t}(i,j,s)$ kann die Abbildungsgleichung umgeschrieben werden zu:

$$\sum_{m,n,t} M_{m,n,t}(i,j,s) \cdot \Phi_{m,n,t} = I_{i,j,s}$$

wobei $M_{m,n,t}(i,j,s)$ die zur Matrix $\varphi_{m,n,t}(i,j,s)$ inverse Matrix ist. Die Matrix $M_{m,n,t}(i,j,s)$ ist somit eine Eigenschaft des Interferometers und das Erfassen dieser Matrix kann als Kalibrierung aufgefasst werden, da man durch Messen einer beliebigen Lichtverteilung $\Phi_{m,n,t}$ an den Pixeln m, n der Pixel-Rasterung (m, n) für das zu messende Bild und anschließender Multiplikation der Matrix $M_{m, n, t}$ (i, j, s) gemäß obiger Formel die Intensitäten der Pixel-Rasterung des Urbildes berechnen kann.

Die für ein gegebenes System ermittelte Matrix $M_{m, n, t}$(i, j, s) kann z.B. in dem Interferometer selbst, in einem externen Speicher oder einer Auswerteschaltung, die aus den gemessenen Interferogrammdaten das entsprechende Urbild berechnet, gespeichert werden. Damit ist ein Interferometer mit Auswerteschaltung oder ein Interferometer, welches auf den externen Speicher zugreifen kann, kalibriert.

Das Verfahren der Kalibrierung kann wesentlich vereinfacht werden, wenn der hier experimentell beschriebene Vorgang zumindest teilweise durch insbesondere numerische Simulation bzw. ein Modell der konkreten Vorrichtung berechnet wird.

Die vorstehend beschriebene Abbildungsgleichung kann näherungsweise immer gelöst werden, insbesondere durch Anwendung der Methodik der Singulärwertzerlegung.

Im Fall eines symmetrisch aufgebauten Interferometers entsprechen die Funktionen $\varphi_{m, n, t}$(i,j,s) Planwellen (d.h. Sinus- bzw. Kosinus-Funktionen), wobei die Indizes den Pixeln entsprechen, auf denen gemessen wird. Die Bildung der inversen Matrix entspricht dann einer inversen Fourier-Transformation.

Im Unterschied zum bekannten Stand der Technik wird die Lage der Bildpunkte des Urbildes nicht durch die Lage eines fokalen Punktes auf einem Detektor bestimmt, z.B. durch die Anwendung eines fokussierenden Abbildungssystems, sondern durch eine numerische Rücktransformation von Interferogrammen.

Die numerische Stabilität der Bildrekonstruktion wird verbessert, wenn sich der sogenannte "Punkt der stationären Phase" auf bzw. nahezu auf der beleuchteten Detektorfläche befindet. Der "Punkt der stationären Phase" kann wie folgt empirisch gefunden werden. Zuerst wird für den zentralen Bildpunkt die $k_{senkrecht}$=0-Interferenz beobachtet, wobei zur Vereinfachung der Darstellung angenommen wird, dass die Armlängen des Interferometers so eingestellt sind, dass sich eine uniforme konstruktive Interferenz eingestellt hat. Dann wird der Urbildpunkt vom zentralen Bildpunkt wegbewegt und es wird das Interenzbild für diesen lichtemittierenden Bildpunkt isoliert betrachtet. Entsteht in einem Bereich des Detektors sukzessive eine vollständig destruktive Interferenz, während in einem anderen Teil der Detektorfläche die konstruktive Interferenz zu 100% bleibt, dann ist das Zentrum dieser konstruktiven Interferenz "der Punkt der stationären Phase". Entsteht im Gegenzug flächig über den ganzen Detektor eine nahezu destruktive und dann gegebenenfalls wieder eine nahezu konstruktive Interferenz und entsteht somit erst nach mehreren dieser Oszillationen eine auf der Detektorfläche komplett modulierte Interferenz, d.h ein Interferenzstreifen mit einem Bereich komplett konstruktiver und einem Bereich komplett destruktiver Interferenz, dann liegt der "Punkt stationärer Phase" nicht auf dem Detektor. Durch Extrapolation der Intensitätsvariation kann jedoch der Punkt bestimmt werden, wo der Punkt konstanter konstruktiver Interferenz liegen würde. Dieser Punkt liegt dann nach Konstruktion außerhalb der beleuchteten Detektorfläche. Es ist plausibel, dass die numerische Stabilität für den Fall, dass der Punkt stationärer Phase zumindest näherungsweise auf dem Detektor liegt und somit die Interferenzmodulation immer vollständig ist, besser ist. Bei einer Ausführung der Vorrichtung nach dem Prinzip der "Division of Amplitude" liegt der Punkt der stationären Phase im Allgemeinen im Inneren der Detektorfläche.

Bei facettierten bzw. mehrspiegelig nach dieser Erfindung aufgebauten Vorrichtungen kann der "Punkt der stationären Phase" in einem der gegebenenfalls mehreren beleuchteten Flächen auf dem Detektor sein. Für den Fall der "Division of Wavefront" liegt der Punkt der stationären Phase am Rand der beleuchteten Detektorfläche, falls die Aperturen für den Lichteintritt in den ersten Interferometerarm und den zweiten Interferometerarm geometrisch aneinander grenzen. Konstellationen, bei denen die Aperturen räumlich deutlich getrennt sind, können dann von Interesse sein, wenn über die Messaufgabe oder über zusätzliche Messungen, z.B. eine räumlich fixierte weitere Vorrichtung gemäß dieser Erfindung, zusätzliche Informationen für die Bildrekonstruktion zur Verfügung stehen.

Bei dem Verfahren zur Rekonstruktion eines Urbildes aus einem mit einem Interferometer gemessenen Bild werden für mindestens eine optische Weglängendifferenz δt zwischen erstem Interferometerarm und zweitem Interferometerarm und für mindestens eine Wellenlänge $\lambda_s$, die von einem Urbild emittiert wird, nachfolgende Schritte durchgeführt: Erfassen von Intensitäten von Pixeln einer Pixel-Rasterung eines Bildes und Berechnen von Intensitäten von Pixeln einer Pixel-Rasterung des Urbildes auf Basis der im Rahmen der Kalibrierung erfassten Intensitäten der Pixel der Pixel-Rasterung des Bildes. Wie bereits oben dargelegt, kann bei Verwendung von geeigneten Rasterungen aus den gemessenen Intensitäten einer Pixel-Rasterung eines zu messenden Bildes die Intensitäten einer Pixel-Rasterung des Urbildes berechnet werden.

Wie bereits oben dargelegt, wird bei dem Verfahren zur Rekonstruktion eines Urbildes aus einem mit einem Interferometer gemessenen Bild die Hauptarbeit des Verfahrens zur Kalibrierung des Interferometers geleistet. Denn wenn die Kalibrierung erfolgreich durchgeführt wurde, d.h., wenn die Matrix $M_{m,n,t}$(i,j,s) erfolgreich bestimmt wurde, besteht die Rekonstruktion lediglich darin, die Intensitätsverteilung $\Phi_{m, n, t}$ auf dem Detektor in der gewählten Rasterung zu messen und durch Einsetzen in die inverse Abbildungsgleichung

$$\sum_{m,n,t} M_{m,n,t}(i,j,s) \cdot \Phi_{m,n,t} = I_{i,j,s}$$

die Intensitätsverteilung des Urbildes zu berechnen.

Ferner kann die Vorrichtung zur linsenlosen Bestimmung bzw. linsenlosen Abbildung eines abzubildenden Urbildes verwendet werden. Der Begriff linsenlos bedeutet insbesondere, dass lediglich spiegelnde Oberflächen verwendet werden, welche insbesondere eben sind.

Ferner kann die Vorrichtung dazu benutzt werden, um eine Einfallsrichtung eines Bildpunktes eines Urbildes relativ zur Vorrichtung festzustellen. Dies kann für mehrere oder sämtliche Wellenlängen des abzubildenden Urbilds geschehen.

Ferner kann die Vorrichtung zur Rekonstruktion eines Urbildes aus einem mit einer Vorrichtung gemessenen Bild verwendet werden.

Nach einer Weiterbildung weist das Interferometer einen Detektor auf. Hierbei liegt der Überlagerungspunkt bevorzugt auf einer Detektionsebene des Detektors. Ferner kann der erste bzw. zweite Zentralstrahl unter einem Winkel auf den Detektor bzw. die Detektionsebene treffen. Der Winkel, unter dem der erste bzw. zweite Zentralstrahl auf den Detektor bzw. die Detektionsebene trifft, ist bevorzugt kleiner oder gleich 45°, besonders bevorzugt kleiner oder gleich 20° und noch bevorzugter kleiner oder gleich 10°. Besonders bevorzugt trifft der erste bzw. zweite Zentralstrahl senkrecht auf den Detektor bzw. die Detektionsebene.

Der Detektor kann vorzugsweise einen CCD-Sensor oder einen CMOS-Sensor bzw. einen aktiven Pixelsensor (engl.: active-pixel sensor (APS)) aufweisen. Bevorzugt weist der Detektor zweidimensionale Anordnungen bzw. Arrays der oben genannten Sensoren auf.

Nach einer Weiterbildung weist der erste Interferometerarm ein erstes Strahlumlenkelement und ein drittes Strahlumlenkelement auf und der zweite Interferometerarm weist ein zweites Strahlumlenkelement und ein viertes Strahlumlenkelement auf.

Nach einer Weiterbildung trifft der erste Zentralstrahl bzw. der erste Lichtstrahl im ersten Interferometerarm auf das erste Strahlumlenkelement und danach auf das dritte Strahlumlenkelement und der zweite Zentralstrahl bzw. der zweite Lichtstrahl trifft im zweiten Interferometerarm auf das zweite Strahlumlenkelement und danach auf das vierte Strahlumlenkelement.

Ein Strahlumlenkelement kann neben einer Umlenkung eines Lichtstrahls in eine beliebige Richtung bevorzugt auch einen Strahlversatz bewirken. Ein Strahlumlenkelement kann z.B. auch eine Vergrößerung oder Verkleinerung bewirken.

In einer bevorzugten Weiterbildung ist ein Strahlumlenkelement so ausgestaltet, dass ein auf das Strahlumlenkelement einfallender Lichtstrahl mehrfach an unterschiedlichen Stellen umgelenkt werden kann. Somit kann der Auftreffpunkt eines auf das Strahlumlenkelement einfallenden Lichtstrahls sich von dem Ausfallpunkt eines von dem Strahlumlenkelement ausfallenden Lichtstrahls unterscheiden. Im Falle eines ebenen Spiegels mit einer Reflektivität von 100% fallen der Auftreffpunkt und der Ausfallpunkt zusammen.

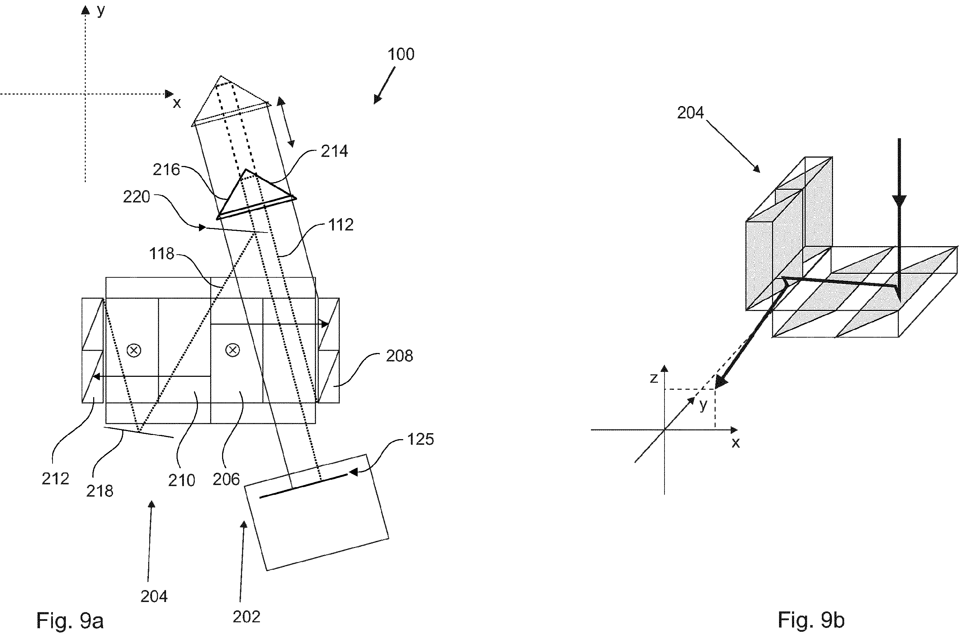

Ein Strahlumlenkelement kann demnach auch durch eine gekreuzte Anordnung von zwei D-Spiegeln realisiert werden, wie sie zum Beispiel in Figur 9 zu sehen ist. In diesem Fall fallen der Auftreffpunkt und der Ausfallpunkt des Strahlumlenkelements nicht zusammen.

Nach einer weiteren Weiterbildung weist mindestens eines aus der Menge des ersten Strahlumlenkelements, des dritten Strahlumlenkelements, des zweiten Strahlumlenkelements und des vierten Strahlumlenkelements mindestens ein diffraktives optisches Element (DOE), insbesondere ein Gitter, auf. Ein DOE kann durch ein sehr leichtes Bauteil realisiert werden. Ein DOE kann die Funktion eines Strahlteilers realisieren. Ein DOE fungiert als Strahlteiler, wenn der auf das DOE einfallende Strahl in die erste und minus-erste Ordnung gebeugt und die nullte Ordnung nahezu unterdrückt oder nicht verwendet wird. Hierbei ist die Intensität in der ersten und minus-ersten Ordnung bevorzugt ungefähr gleich.

Nach einer weiteren Weiterbildung weist mindestens eines aus der Menge des ersten Strahlumlenkelements, des dritten Strahlumlenkelements, des zweiten Strahlumlenkelements und des vierten Strahlumlenkelements mindestens ein erstes dielektrisches Medium auf.

Das dielektrische Medium weist bevorzugt die Form eines Prismas auf. Die mit einem Prisma vorhandene chromatische Aberration bzw. Dispersion führt zu einer wellenlängenabhängigen Strahlablenkung. Berücksichtigt die Vorrichtung die bevorzugte Ausführung, bei der das erste Stahlumlenkungselement und das zweite Strahlumlenkelement durch eine Rotation ineinander überführt werden können, so kompensieren sich die dispersiven Einflüsse zwischen den beiden Interferometerarmen in der Weise, dass der Überlappungspunkt zwar im Ort auf der Detektorebene für die verschiedenen Wellenlängen verschoben ist, aber es kommt immer noch zwischen den beiden gleichen Strahlen zu einer Überlappung. Das heißt es kommt unabhängig von der Wellenlänge zu einer Überlappung.

Als eine weitere wichtige Erkenntnis der Erfindung kann angesehen werden, dass bei einem Interferometer, welches als erstes und zweites Strahlumlenkelement jeweils einen D-Spiegel aufweist, die damit verbundene facettenbedingte optische Weglängendifferenz für beide Interferometerarme gleich ist und sich somit gerade kompensiert, soweit die Ausführung die Rotationssymmetrie zwischen dem ersten Strahlumlenkelement und dem zweiten Strahlumlenkelement berücksichtigt. Dies ermöglicht es, eine kompakte Ausführungsform von D-Spiegeln für Interferometer zu verwenden.

Nach einer weiteren Weiterbildung ist das erste Strahlumlenkelement vorzugsweise in einer Anordnungsebene angeordnet, die durch das erste Strahlumlenkelement und eine zu einer optischen Achse senkrechte Ebene aufgespannt ist, wobei die optische Achse ausgehend vom zentralen Bildpunkt durch die Winkelhalbierende zwischen dem ersten Zentralstrahl und den zweiten Zentralstrahl gegeben ist. Hierbei ist das zweite Strahlumlenkelement so angeordnet, dass der Abstand des zweiten Strahlumlenkelements zur Anordnungsebene kleiner als der Abstand des zweiten Strahlumlenkelements von der optischen Achse ist. Ferner sind hierbei das dritte Strahlumlenkelement, das vierte Strahlumlenkelement und der Überlagerungspunkt so angeordnet, dass der Abstand des dritten Strahlumlenkelements, des vierten Strahlumlenkelements und des Überlagerungspunktes von der Anordnungsebene jeweils kleiner als der Abstand des dritten Strahlumlenkelements von der optischen Achse ist.

Nach einer bevorzugten Weiterbildung ist das erste Strahlumlenkelement in einer Anordnungsebene angeordnet, die durch das erste Strahlumlenkelement und eine zu einer optischen Achse senkrechte Ebene aufgespannt ist. Hierbei ist die optische Achse ausgehend vom zentralen Bildpunkt durch die Winkelhalbierende zwischen dem ersten Zentralstrahl und den zweiten Zentralstrahl gegeben.

Das zweite Strahlumlenkelement ist so angeordnet, dass eine Verbindungslinie zwischen dem Auftreffpunkt des ersten Zentralstrahls auf dem ersten Strahlumlenkelement und dem Auftreffpunkt des zweiten Zentralstrahls auf dem zweiten Strahlumlenkelement und die Anordnungsebene einen Winkel kleiner oder gleich 30° einschließen. Bevorzugt ist dieser Winkel kleiner oder gleich 20°, weiter bevorzugt kleiner oder gleich 10°, noch bevorzugter kleiner oder gleich 5° und am bevorzugtesten gleich 0°.

Das dritte Strahlumlenkelement ist vorzugsweise so angeordnet, dass der erste Zentralstrahl zwischen dem ersten Strahlumlenkelement und dem dritten Strahlumlenkelement und die Anordnungsebene einen Winkel kleiner oder gleich 30° einschließen. Bevorzugt ist dieser Winkel kleiner oder gleich 20°, weiter bevorzugt kleiner oder gleich 10°, noch bevorzugter kleiner oder gleich 5° und am bevorzugtesten gleich 0°.

Das vierte Strahlumlenkelement ist vorzugsweise so angeordnet, dass der zweite Zentralstrahl zwischen dem zweiten Strahlumlenkelement und dem vierten Strahlumlenkelement und die Anordnungsebene einen Winkel kleiner oder gleich 30° einschließen. Bevorzugt ist dieser Winkel kleiner oder gleich 20°, weiter bevorzugt kleiner oder gleich 10°, noch bevorzugter kleiner oder gleich 5° und am bevorzugtesten gleich 0°.

Das dritte Strahlumlenkelement und das vierte Strahlumlenkelement sind bevorzugt so angeordnet, dass die Verbindungslinie zwischen dem Auftreffpunkt des ersten Zentralstrahls auf dem dritten Strahlumlenkelement und dem Überlagerungspunkt und/oder die Verbindungslinie zwischen dem Auftreffpunkt des zweiten Zentralstrahls auf dem vierten Strahlumlenkelement und dem Überlagerungspunkt mit der Anordnungsebene jeweils einen Winkel kleiner oder gleich 30° einschließen. Bevorzugt sind diese Winkel kleiner oder gleich 20°, weiter bevorzugt kleiner oder gleich 10°, noch bevorzugter kleiner oder gleich 5° und am bevorzugtesten gleich 0°.

Nach einer Weiterbildung sind der vom dritten Strahlumlenkelement abgelenkte erste Zentralstrahl und der vom vierten Strahlumlenkelement abgelenkte zweite Zentralstrahl überlagert.

Nach einer Weiterbildung treffen der vom dritten Strahlumlenkelement abgelenkte erste Zentralstrahl und/oder der vom vierten Strahlumlenkelement abgelenkte zweite Zentralstrahl vorzugsweise senkrecht auf die Detektionsebene des Detektors.

Nach einer Weiterbildung liegen der erste Zentralstrahl, der zweite Zentralstrahl und die optische Achse in einer Ebene.

Nach einer weiteren Weiterbildung sind das erste Strahlumlenkelement, das zweite Strahlumlenkelement, das dritte Strahlumlenkelement und das vierte Strahlumlenkelement in einer Ebene, z.B. in der Anordnungsebene, angeordnet.

Nach einer weiteren Weiterbildung ist es bevorzugt, dass die optische Abbildung, die den ersten Zentralstrahl vor dem Auftreffen auf das erste Strahlumlenkelement in den ersten Zentralstrahl nach dem Auftreffen auf das erste Strahlumlenkelement überführt, und die optische Abbildung, die den zweiten Zentralstrahl vor dem Auftreffen auf das zweite Strahlumlenkelement in den zweiten Zentralstrahl nach dem Auftreffen auf das zweite Strahlumlenkelement überführt, durch eine Drehung um einen Drehwinkel zwischen 150° und 210° um eine Rotationsachse und/oder eine Verschiebung entlang eines Verschiebungsvektors ineinander überführt werden können. Der Drehwinkel liegt bevorzugt zwischen 170° und 190° und beträgt noch bevorzugter genau 180°. Der Verschiebungsvektor ist bevorzugt ein Vektor, dessen Betrag kleiner als der maximale Abstand innerhalb des Interferometers ist, und noch bevorzugter der Nullvektor, falls der Ursprung der Drehung geeignet gewählt ist.

Die gerade genannte Eigenschaft der beiden optischen Abbildungen, die ineinander überführt werden können, ist ebenso eine Eigenschaft der beiden Interferometerarme, da die jeweiligen Strahlumlenkelemente in den Interferometerarmen angeordnet sind. Eine bevorzugte Weiterbildung eines Interferometers weist zwei Interferometerarme auf, die durch eine Drehung um einen Drehwinkel zwischen 150° und 210° um die Rotationsachse und/oder eine Verschiebung entlang eines Verschiebungsvektors ineinander überführt werden können. Der Drehwinkel ist bevorzugt zwischen 170° und 190° und noch bevorzugter genau 180°. Der Verschiebungsvektor ist bevorzugt ein Vektor, dessen Betrag kleiner als der maximale Abstand innerhalb des Interferometers ist, und noch bevorzugter der Nullvektor, falls der Ursprung der Drehung geeignet gewählt ist.

Bei einer bevorzugten Weiterbildung sind das erste und zweite Strahlumlenkelement so angeordnet und gebaut, dass das erste Strahlumlenkelement durch eine Drehung um einen Drehwinkel zwischen 150° und 210° um die Rotationsachse und/oder eine Verschiebung entlang eines Verschiebungsvektors ineinander überführt werden können. Der Drehwinkel liegt bevorzugt zwischen 170° und 190° und beträgt noch bevorzugter genau 180°. Der Verschiebungsvektor ist bevorzugt ein Vektor, dessen Betrag kleiner als der maximale Abstand innerhalb des Interferometers ist, und noch bevorzugter der Nullvektor, falls der Ursprung der Drehung geeignet gewählt ist.

Nach einer weiteren Weiterbildung schließt die Rotationsachse mit der optischen Achse einen Winkel kleiner oder gleich 30° ein. Bevorzugt ist dieser Winkel kleiner oder gleich 20°, noch bevorzugter kleiner oder gleich 10° und am bevorzugtesten kleiner oder gleich 5°. Ferner ist es bevorzugt, dass die Rotationsachse mit der optischen Achse übereinstimmt.

Nach einer weiteren Weiterbildung sind das erste Strahlumlenkelement und das zweite Strahlumlenkelement in einer einzigen Vorrichtung enthalten. Dies kann beispielsweise durch einen Strahlteiler realisiert werden, der das von dem abzubildenden Objekt einfallende Licht in zwei unterschiedliche Richtungen, zum Beispiel den ersten Interferometerarm und den zweiten Interferometerarm lenkt.

Nach einer weiteren Weiterbildung sind das dritte Strahlumlenkelement und das vierte Strahlumlenkelement in einer einzigen Vorrichtung enthalten. Dies kann beispielsweise durch eine Einrichtung zur Strahlzusammenführung realisiert werden, die die von den Interferometerarmen kommenden Lichtstrahlen bzw. die auf das dritte Strahlumlenkelement und das vierte Strahlumlenkelement treffenden Lichtstrahlen zu einem einzigen Lichtstrahl vereint. Bevorzugt erfolgt die Strahlzusammenführung bzw. Vereinigung der Lichtstrahlen kohärent.

Nach einer weiteren Weiterbildung weist mindestens eines aus der Menge des ersten Strahlumlenkelements, des dritten Strahlumlenkelements, des zweiten Strahlumlenkelements und des vierten Strahlumlenkelements mindestens einen halbdurchlässigen Spiegel auf. Mit Hilfe eines halbdurchlässigen Spiegels können z.B. ein auf die Vorderseite des halbdurchlässigen Spiegels fallender Lichtstrahl und ein auf die Rückseite des halbdurchlässigen Spiegels fallender Lichtstrahl auf der Vorderseite des halbdurchlässigen Spiegels zu einem gemeinsamen Strahl zusammengeführt werden.

Nach einer weiteren Weiterbildung schließt die optische Achse und der erste Zentralstrahl am Überlagerungspunkt einen Winkel zwischen 45° und 135° ein. Bevorzugt liegt dieser Winkel zwischen 60° und 120°, noch bevorzugter zwischen 75° und 105° und am bevorzugtesten ist der Winkel gleich 90°.

Nach einer weiteren Weiterbildung ist zwischen dem abzubildenden Objekt einerseits und dem ersten Interferometerarm und dem zweiten Interferometerarm andererseits mindestens ein Strahlaufweiter (engl.: beam expander) angeordnet. Der Begriff Strahlaufweiter ist allgemein zu verstehen und umfasst auch Strahlverkleinerer. Durch diese Weiterbildung kann ein Mikroskop bzw. ein Teleskop realisiert werden.

Nach einer weiteren Weiterbildung ist zwischen dem abzubildenden Objekt einerseits und dem ersten Interferometerarm und dem zweiten Interferometerarm andererseits mindestens ein Strahlteiler angeordnet. In diesem Fall kann der Strahlteiler dazu benutzt werden, das von dem abzubildenden Objekt kommende Licht in die beiden Interferometerarme aufzuspalten.

Nach einer weiteren Weiterbildung ist zwischen dem dritten Strahlumlenkelement und dem vierten Strahlumlenkelement einerseits und dem Überlagerungspunkt andererseits mindestens eine Einrichtung zur Strahlzusammenführung angeordnet. Die Einrichtung zur Strahlzusammenführung kann zum Beispiel der Zusammenführung der Lichtstrahlen der beiden Interferometerarme dienen. Die beiden zusammengeführten Lichtstrahlen können dann am Überlagerungspunkt interferieren. Die Einrichtung zur Strahlzusammenführung kann zum Beispiel ein DOE aufweisen. Hierbei kann das DOE umgekehrt zur normalen Strahlführung benutzt werden. Hierbei können zum Beispiel die erste und minus-erste Beugungsordnung als die beiden zusammenzuführenden Strahlen und ein für gewöhnlich einfallender Strahl als ausfallender zusammengeführter Strahl benutzt werden.

Nach einer weiteren Weiterbildung weist ein Strahlumlenkelement mindestens eine D-Spiegel-Anordnung oder mindestens einen D-Spiegel auf. Die D-Spiegel-Anordnung weist bevorzugt mindestens einen D-Spiegel auf.

Unter einem D-Spiegel kann zum Beispiel ein dispersiver Spiegel verstanden werden, das heißt eine optische Vorrichtung mit mindestens einem spiegelnden Element und mindestens einem dispersiven Element, wie zum Beispiel einem dielektrischen Medium.

Nach einer Weiterbildung weist ein D-Spiegel folgendes auf: ein zweites dielektrisches Medium mit einer Lichteinfallsfläche und einem Brechungsindex größer als 1,3, und mindestens zwei der Lichteinfallsfläche nachgeordnete Spiegelelemente zur Ablenkung des Lichtstrahls in einen von dem mindestens einen D-Spiegel ausfallenden Lichtstrahl, wobei die bevorzugt drehbaren Spiegelelemente jeweils benachbart zueinander angeordnet sind, wobei die Spiegelelemente jeweils eine ebene reflektierende Oberfläche aufweisen, wobei das zweite dielektrische Medium einen Raum zwischen den reflektierenden Flächen der Spiegelelemente und der Lichteinfallsfläche vollständig ausfüllt, und wobei die Spiegelelemente eine Ausdehnung größer als 0,1 mm aufweisen.

Gemäß einer weiteren Weiterbildung weist die mindestens eine D-Spiegel-Anordnung folgendes auf: einen ersten D-Spiegel und einen zweiten D-Spiegel, wobei der erste D-Spiegel und der zweite D-Spiegel so angeordnet sind, dass der einfallende Lichtstrahl zunächst auf den ersten D-Spiegel trifft und dann von dem ersten D-Spiegel auf den zweiten D-Spiegel gelenkt wird, die Spiegelelemente des ersten und/oder zweiten D-Spiegels jeweils in einer Ebene liegen, die Lichteinfallsfläche des ersten und/oder des zweiten D-Spiegels eine Ebene ist, die Ebene der Spiegelelemente des ersten bzw. zweiten D-Spiegels parallel zur Lichteinfallsfläche des ersten bzw. zweiten D-Spiegels ist, und ein auf der Lichteinfallsfläche des ersten D-Spiegels stehendes Lot mit einem auf der Lichteinfallsfläche des zweiten D-Spiegels stehenden Lot einen Winkel von 70° bis 110° bildet. Bevorzugt liegt dieser Winkel zwischen 80° und 100°, noch bevorzugter beträgt er genau 90°.

Nach einer weiteren Weiterbildung weist mindestens eines der Strahlumlenkelemente eine Vorrichtung zur Verschiebung entlang einer Richtung im Raum auf. Das entsprechende Strahlumlenkelement kann ausgehend von einer Grundposition im Raum verschoben werden. Hierdurch wird zum Beispiel ermöglicht, dass der optische Pfad des Interferometerarms, in welchem sich das entsprechende Strahlumlenkelement befindet, verändert, das heißt verlängert oder verkürzt, werden kann. Hierbei ist es eventuell möglich das Strahlumlenkelement nachzujustieren. Falls das zu verschiebende Strahlumlenkelement dazu dient, die beiden Interferometerarme zu vereinigen, kann durch die Verschiebung im Raum eine Veränderung der Differenz der optischen Pfade der Interferometerarme erzielt werden, zum Beispiel kann der optische Weg des einen Interferometerarms länger werden, während der optische Weg des anderen Interferometerarms kürzer wird. Hierdurch können etwaige Mehrdeutigkeiten bei der Ermittlung der Position des entsprechenden Bildpunkts eliminiert werden. Für den Fall einer monochromatischen Anwendung kann hierfür eine Variation um eine halbe Wellenlänge ausreichend sein. Diese Variation kann z.B. elektrooptisch erzeugt werden. Die Signalmodulation kann zusätzlich für eine Lock-in-Detektion des Interferenzbildes genutzt werden. Das Bildsignal kann dadurch im Signal-Rausch-Verhältnis und in der Streulicht-Eliminierung erheblich verbessert werden.

Ferner kann das Interferometer, insbesondere der Detektor, vorzugsweise eine Vorrichtung aufweisen, die das Interferenz-Muster der durch die beiden Interferometerarme verlaufenden Lichtstrahlen für verschiedene Positionen der Vorrichtung zur Verschiebung entlang einer Richtung im Raum aufnimmt.

Nach einer weiteren Weiterbildung weist ein Strahlumlenkelement eine Vorrichtung zur Veränderung eines optischen Pfades innerhalb des Strahlumlenkelements auf. Hierbei wird der optische Pfad, den das Licht zurücklegt, ohne eine Verschiebung der Vorrichtung erreicht. Dies kann zum Beispiel durch Vorrichtungen, die den elektrooptischen Effekt benutzen, wie z.B. einer Pockelszelle, einen elektrooptischen Modulator oder einer Kerr-Zelle, realisiert werden. Hierdurch können etwaige Mehrdeutigkeiten bei der Ermittlung der Position des entsprechenden Bildpunkts eliminiert werden. Optischer Weg und optischer Pfad werden hier synonym verwendet. Dasselbe gilt für die optische Pfadlänge und die optische Weglänge.

Nach einer weiteren Weiterbildung weist ein Strahlumlenkelement ein in Transmission betriebenes Prisma auf. Dies kann ein Prisma sein, das an einer Seite verspiegelt ist. Hierbei kann der einfallende Strahl durch eine Seite des Prismas eintreten, an einer benachbarten, verspiegelten Seite des Prismas reflektiert werden und durch die dritte Seite des Prismas wieder austreten. Dies hat den Vorteil, dass die Detektorgröße und der Pixelabstand auf dem Detektor an die Vorrichtung angepasst werden können.

Die Erfindung kann insbesondere in folgenden Bereichen angewandt werden:

A.) Oberflächenprobung, maschinelles Sehen (engl.: "machine vision"). Dies betrifft vor allem folgende Aufgabenstellungen: Defekterkennung auf Oberflächen, Form- und Maßprüfung, Lageerkennung, Oberflächeninspektion und Objekterkennung. Ein wichtiger Bereich ist hierbei die Qualitätssicherung z.B. von Bauteilen und Regelung von Prozessen. Die vorliegende Erfindung ist geeignet mit hoher Auflösung, z.B. bei sichtbarem Licht im Bereich von $10^{-7}$ bis $10^{-6}$ m und auf größere Arbeitsdistanz, z.B. 1 m, die Eigenschaften einer Oberfläche zu untersuchen. Mit Hilfe der Abbé-Formel lässt sich für gegebene Abstände und Wellenlängen das Auflösungsvermögen berechnen. Bei einem Detektor der Größe 50 mm x 50 mm, einem Arbeitsabstand von 1m, einem Brechungsindex in Luft von 1, und einer Wellenlänge von 500 nm, beträgt das Auflösungsvermögen 10 μm.

Die Abbildungsqualität ist unabhängig von Abbildungsfehlern alleine gegeben durch das Beugungslimit. Interessant ist hierbei auch, dass die Pixelgröße des Detektors nicht das Auflösungsvermögen der Vorrichtung beschränkt. Dies ist daran zu sehen, dass die Auflösung durch die erste Grundmode des Interferenzmusters auf dem Detektor gegeben ist und damit gerade einer großflächigen Struktur mit einer Knotenlinie entspricht. Die Vorrichtung stellt damit geringe Anforderungen an die Detektorqualität. Dies kann für ungewöhnliche Wellenlängenbereiche, wie z.B. UV, IR oder fernes IR, von Interesse sein, wo es keine verfügbaren Linsensysteme, aber Messaufgaben gibt.

Die zu messende Oberfläche muss nicht eben sein, da die mit der Erfindung vorgeschlagene Messtechnik unabhängig von einem Fokus arbeitet, wie er aus konventionellen Abbildungssystemen mit Linsen bekannt ist. Die Messtechnik kann gleichzeitig bei mehreren Wellenlängen eingesetzt werden und erlaubt daher chemische und strukturelle Selektivität.

Die nach dem Messprinzip automatisch vorhandene Messoption des Fourier-Transform-Spektrometers erlaubt im Bedarfsfall eine ortsaufgelöste Spektralanalyse. Übliche Linsensysteme sind nur mit hohem zusätzlichem Aufwand mit einem Fourier-Transform-Spektrometer kombinierbar, da es keinen Bereich mit parallelem Strahlengang gibt.

Zudem besteht die Möglichkeit, das Messverfahren mit einer phasensensitiven Messtechnik, wie z.B. Lock-in, zu kombinieren, wobei das Messsignal mit der Variation der Pfadlänge in einem Interferometerarm kombiniert werden kann. Damit sind sowohl eine gute Streulicht-Unterdrückung wie auch eine deutliche Verbesserung des Signal-Rausch-Verhältnisses erzielbar.

Die Anwendung des Systems bietet somit dort Vorteile, wo kleine Strukturen hochaufgelöst zweidimensional analysiert werden müssen. Beispiele sind Strukturen in der Mikromechanik, Halbleitertechnik, Oberflächenbearbeitung, Schweißtechnik oder Barcodes.

B) Die unter Punkt A beschriebene Messtechnik erlaubt es, über die durch die Vorrichtung gemessenen Winkel und eine geeignete trigonometrische Auswertung, ein wellenlängenkalibriertes dreidimensionales Modell des zu messenden Objektes zu rekonstruieren. Erforderlich ist hierfür eine Ausmessung des Objektes aus mindestens zwei Blickwinkeln. Da es eine interferometrische Methode ist, ist die Vorrichtung automatisch kalibriert durch die feste Wellenlänge des eingesetzten Messlichtes. Gegenüber Laserscanmethoden hat die Technik gemäß der Erfindung den Vorteil einer höheren räumlichen Auflösung, nämlich am Beugungslimit, und die parallele Vielkanalauswertung. Ein konventionelles Scan-System hat dahingegen lediglich eine Einkanalauswertung. Die Anwendung des Systems bietet somit auch dort Vorteile, wo kleine Strukturen hochaufgelöst dreidimensional analysiert werden müssen. Beispiele sind Strukturen in der Mikromechanik, Halbleitertechnik, Oberflächenbearbeitung und Schweißtechnik.

C) Die Einsatzoption der Erfindung auch für kleine Distanzen erlaubt es, die Vorteile der Erfindung auch für mikroskopische Anwendungen auszunutzen. Die erreichbare Auflösung ist wie bei einem Linsensystem gegeben durch das Abbé-Limit. Jedoch ist das System nicht durch Linsenfehler beeinträchtigt, insbesondere dann, wenn die Strahlmanipulation linsenfrei durch insbesondere planare Spiegel, dispersive planare Spiegel, z.B. D-Spiegel, oder diffraktive Elemente erreicht wird. Für den fernen UV-Bereich sind auch atomare Gitterstrukturen für das Messprinzip einsetzbar, so dass mit der Erfindung ein Instrument der mikroskopischen Raumauflösung für das extreme UV gegeben ist. Da die Arbeitsdistanz eines derartigen Mikroskops im Bereich von 1 cm liegen kann, ist auch eine Objektuntersuchung durch eine druckhaltende Scheibe einer Vakuumkammer hindurch möglich. Die lange Arbeitsdistanz erlaubt es somit, z.B. lebende Substanzen oder auch vakuumempfindliche Substanzen im extremen UV am Abbé-Limit zu untersuchen. Dies ist eine Messtechnik, die derzeit nicht oder nur in Einzelfällen zu sehr hohen Kosten verfügbar ist.

D) Die Erfindung kann auch für größere Distanzen eingesetzt werden, wobei hier die vorhandenen konkurrierenden Systeme z.B. LIDAR-Systeme sind. Gegenüber den derzeitigen LIDAR-Systemen hat eine Verwendung der Erfindung den Vorteil, dass die räumliche Auflösung nicht mehr durch die Größe des Laserspots gegeben ist und dass die Technik grundsätzlich eine Vielkanaltechnik ist. Jeder Pixel auf dem Detektor der Struktur entspricht einem Kanal. Konventionelle LIDAR-System sind Einkanalsysteme. Damit verbunden ist eine lange Datenerfassungszeit, die mit dem Einsatz der Erfindung deutlich reduziert werden kann.

Gleichzeitig kann die Auflösung erhöht werden und bei Bedarf eine spektrale Analyse erfolgen. Die Qualität von LIDAR- Messungen sollte sich mit diesem Ansatz deutlich erhöhen lassen.

E) Die Vorrichtung ist auch geeignet für die Erfassung und Analyse von breitbandig spektralem Licht (EM-Strahlung), z.B. Lumineszenz. Im Vergleich zu konventionellen Fernrohrsystemen, Teleskopsystemen ist zu erwarten, dass das System zwar eine geringere Lichtstärke hat, aber dafür eine größere Auflösung hat und frei von Linsenfehlern ist. Der einfache Aufbau des Systems z.B. mit D-Spiegeln oder diffraktiven Elementen erlaubt die einfache und kostengünstige Konstruktion von großen und im Gewicht leichten Aperturen. Dies sollte, z.B., auch interessant für Satellitenanwendungen sein.

Die vorliegende Erfindung wird nun anhand einzelner Beispiele und Figuren weiter erläutert. Diese Beispiele und Figuren dienen nur zur Veranschaulichung des allgemeinen erfinderischen Konzepts, ohne dass die Beispiele und Figuren als die Erfindung in irgendeiner Weise einschränkend ausgelegt werden dürfen.

Figur 1a zeigt eine schematische Abbildung einer Ausführungsform eines Interferometers. Figur 1b illustriert an einem Überlagerungspunkt den Zusammenhang der senkrechten Wellenvektorkomponenten von Lichtstrahlen, die nicht vom zentralen Bildpunkt ausgehen.

Figuren 2, 3 und 6 bis 8 zeigen schematische Abbildungen von Ausführungsformen gemäß verschiedener Ausführungsformen der vorliegenden Offenbarung.

Figuren 4 und 5 zeigen unterschiedliche Ausführungsformen von Strahlteilern bzw. Einrichtungen zu Strahlzusammenführung wie sie in den Figuren 2 bzw. 3 zu sehen sind. Figur 9 zeigt eine experimentell realisierte Ausführungsform eines Interferometers.

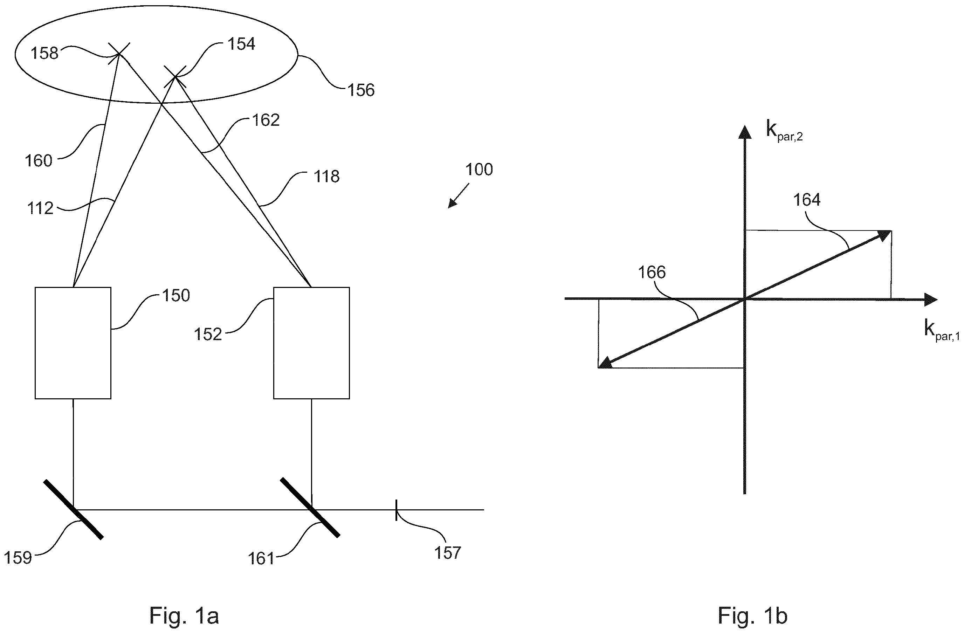

Figur 1a zeigt eine schematische Abbildung einer Ausführungsform eines Interferometers 100. Ein abzubildendes Objekt 156 wird hierbei interferometrisch vermessen. Für das abzubildende System besteht das abzubildende Objekt 156 aus einer Vielzahl von Bildpunkten 158, von denen in Fig. 1a nur einer exemplarisch dargestellt ist. Von jedem Bildpunkt 158 gehen zwei Lichtstrahlen, ein erster Lichtstrahl 160 und ein zweiter Lichtstrahl 162, aus, welche zwei Interferometerarme, den ersten Interferometerarm 150 und den zweiten Interferometerarm 152, durchlaufen und hinter den beiden Interferometerarmen 150, 152 an einem Überlagerungspunkt 157 überlagert werden, wo ein Interferenzmuster detektiert wird. Das abzubildende Objekt 156 weist ferner einen zentralen Bildpunkt 154 auf, von dem zwei Zentralstrahlen, der erste Zentralstrahl 112 und der zweite Zentralstrahl 118, ausgehen, welche jeweils durch den ersten Interferometerarm 150 und den zweiten Interferometerarm 152 verlaufen und am Überlagerungspunkt 157 überlagert sind. Der erste Zentralstrahl 112 bzw. der erste Lichtstrahl 160 und der zweite Zentralstrahl 118 bzw. der zweiten Lichtstrahl 162 können auf verschiedenartige Weise nach Durchlaufen der beiden Interferometerarme 150, 152 überlagert bzw. überlappt werden. Dies kann zum Beispiel mit einem Spiegel 159 und einem halbdurchlässigen Spiegel 161 bewerkstelligt werden. Der erste Zentralstrahl 112 bzw. der ersten Lichtstrahl 160 fällt nach Durchlaufen des ersten Interferometerarms 150 auf den Spiegel 159 und wird von diesem bevorzugt senkrecht abgelenkt. Der zweite Zentralstrahl 118 bzw. der zweite Lichtstrahl 162 fällt nach Durchlaufen des zweiten Interferometerarms 152 auf den halbdurchlässigen Spiegel 161, von dem ein Teil bevorzugt senkrecht reflektiert wird und ein anderer Teil durch den halbdurchlässigen Spiegel 161 hindurch tritt und verloren geht. Der Spiegel 159 und der halbdurchlässigen Spiegel 161 können so justiert bzw. ausgerichtet werden, dass der erste Zentralstrahl 112 bzw. der ersten Lichtstrahl 160 nach der Reflektion von dem Spiegel 159 so durch den halbdurchlässigen Spiegel 161 tritt, dass hinter dem halbdurchlässigen Spiegel 161 die Ausbreitungsrichtungen des erster Zentralstrahls 112 bzw. des ersten Lichtstrahls 160 einerseits und des zweiten Zentralstrahls 118 bzw. des zweiten Lichtstrahls 162 andererseits im Wesentlichen übereinstimmen. Wie bereits oben dargelegt, gilt für den ersten Zentralstrahl 112 und den zweiten Zentralstrahl 118, dass hinter dem halbdurchlässigen Spiegel 161 deren Ausbreitungsrichtungen vollkommen übereinstimmen. Für den ersten Lichtstrahl 160 und den zweiten Lichtstrahl 162 gilt, wie ebenfalls bereits oben dargelegt, dass an dem Überlagerungspunkt 157 eine zum ersten Zentralstrahl 112 senkrechte Wellenvektorkomponente 164 des ersten Lichtstrahls 160 und eine zum zweiten Zentralstrahl 118 senkrechte Wellenvektorkomponente 166 des zweiten Lichtstrahls 162 entgegengesetzt gleich sind, wie in Figur 1b verdeutlicht. Aus Gründen der Darstellung sind in Figur 1a lediglich die Zentralstrahlen 112, 118 dargestellt, wohingegen in Figur 1b der ersten Lichtstrahl 160 und der zweiten Lichtstrahl 162 dargestellt sind. In Figur 1b ist eine Ebene am Überlagerungspunkt 157 dargestellt, welche senkrecht zur Ausbreitungsrichtung des erster Zentralstrahls 112 bzw. des zweiten Zentralstrahls 118 verläuft. Als zwei zueinander senkrecht stehende Basisvektoren dieser Ebene können zum Beispiel die Wellenvektoren $k_{par,1}$ und $k_{par,2}$ gewählt werden. Der Wellenvektor $k_{par,1}$ kann zum Beispiel in der Zeichnungsebene der Figur 1a liegen. Die zum ersten Zentralstrahl 112 senkrechte Wellenvektorkomponente 164 des ersten Lichtstrahls 160 weist dann zum Beispiel, wie in Figur 1b dargestellt, eine Komponente parallel zu $k_{par,1}$ und eine andere Komponente parallel zu $k_{par,2}$ auf. Die zum zweiten Zentralstrahl 118 senkrechte Wellenvektorkomponente 166 des zweiten Lichtstrahls 162 weist im Vergleich zur Wellenvektorkomponente 164 bis auf das Vorzeichen dieselben Komponenten $k_{par,1}$ und $k_{par,2}$ auf. Die Wellenvektorkomponenten 164 und 166 sind demnach betragsgleich, jedoch antiparallel.

Der zentrale Bildpunkt 154 zeichnet sich dadurch aus, dass die beiden von dem zentralen Bildpunkt 154 ausgehenden Zentralstrahlen 112, 118 am Überlagerungspunkt 157 keine senkrechten Wellenvektorkomponenten aufweisen und eine $k_{senkrecht}$=0-Interferenz erzeugen.

Bei einer in der Praxis gegebenen Vorrichtung kann dieser zentrale Bildpunkt 154 nach Herstellung der Vorrichtung bestimmt werden, indem der Bildpunkt solange variiert wird bis die Interferenz am Überlagerungspunkt 157 eine $k_{senkrecht}$=0-Interferenz aufweist. Dieses Verfahren hat sich unter Laborbedingungen bewährt.

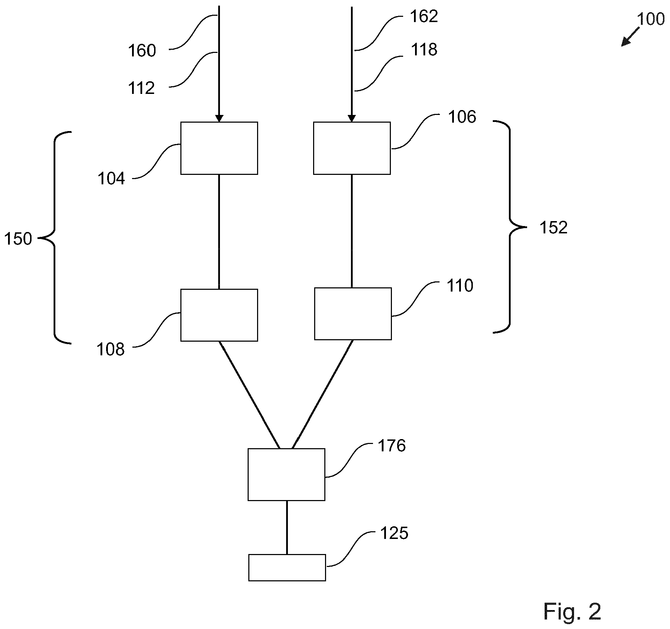

Figur 2 zeigt eine schematische Darstellung eines Interferometers 100. Von einem nicht dargestellten abzubildenden Objekt 156 ausgehendes Licht wird über einen ersten Interferometerarm 150 und einen zweiten Interferometerarm 152 zur Interferenz gebracht. In der Ausführungsform der Figur 2 weist der erste Interferometerarm 150 das erste Strahlumlenkelement 104 und das dritte Strahlumlenkelement 108, und der zweite Interferometerarm 152 das zweite Strahlumlenkelement 106 und das vierte Strahlumlenkelement 110 auf.

Der erste Zentralstrahl 112 bzw. der ersten Lichtstrahl 160 verläuft durch den ersten Interferometerarm 150 und der zweite Zentralstrahl 118 bzw. der zweite Lichtstrahl 162 verläuft durch den zweiten Interferometerarm 152. Da das abzubildende Objekt 156 nicht unbedingt im Unendlichen liegt, sind der erste Zentralstrahl 112 und der zweite Zentralstrahl 118 nicht unbedingt parallel zueinander. Dies gilt ebenfalls für den ersten Lichtstrahl 160 und den zweiten Lichtstrahl 162.

Das von jedem einzelnen Bildpunkt 158 oder dem zentralen Bildpunkt 154 des abzubildenden Objekts 156 ausgehende Licht breitet sich in Form von Kugelwellen in Richtung des Interferometers 100 aus. Unterschiedliche Wellenfronten derselben Kugelwelle treffen einerseits auf das erste Strahlumlenkelement 104 des ersten Interferometerarms 150 und andererseits auf das zweite Strahlumlenkelement 106 des zweiten Interferometerarms 152. Diese Trennung der Wellenfronten einer einzigen Lichtquelle, insbesondere der Kugelwelle, wird im Fachjargon auch "Division of Wavefront" genannt.

Der erste Interferometerarm 150 und der zweite Interferometerarm 152 werden über eine Einrichtung 176 zur Strahlzusammenführung zusammengeführt. Falls die Kohärenzbedingung erfüllt ist, weist das von der Einrichtung zur Strahlzusammenführung 176 zusammengeführte Licht Interferenzen auf, welche auf einem hinter der Einrichtung 176 zur Strahlzusammenführung angeordneten Detektor 125 detektiert werden können.

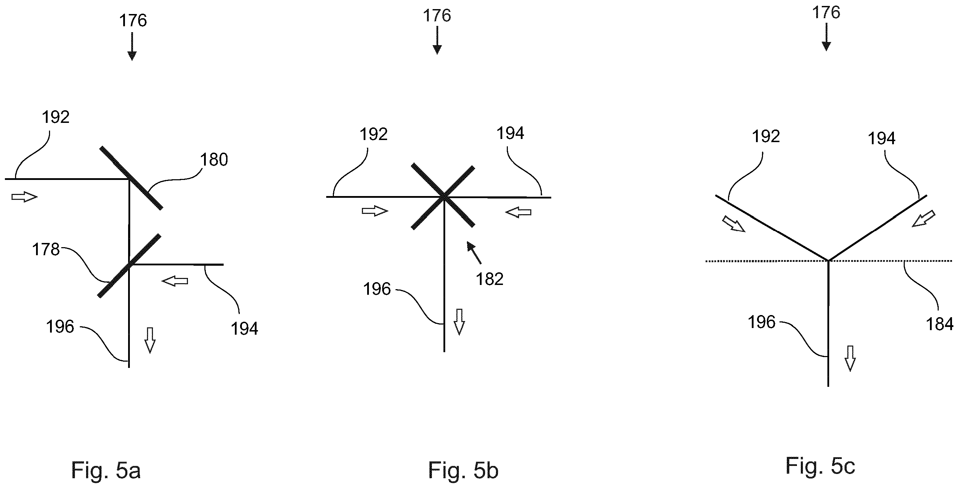

Verschiedene Ausführungsformen einer Einrichtung 176 zur Strahlzusammenführung sind in Figur 5 dargestellt, wie untenstehend beschrieben.

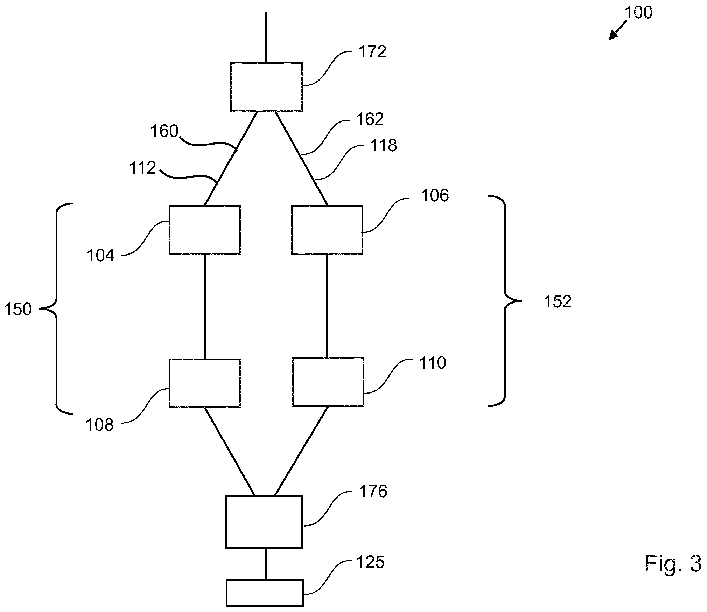

Die Ausführungsform der vorliegenden Erfindung der Figur 3 unterscheidet sich von der Ausführungsform der Figur 2 lediglich durch einen Strahlteiler 172, welcher zwischen dem nicht dargestellten abzubildenden Objekt 156 einerseits und dem ersten Strahlumlenkelement 104 und dem zweiten Strahlumlenkelement 106 andererseits angeordnet ist. Der Strahlteiler 172 teilt das von dem abzubildenden Objekt 156 kommende Licht in zwei Lichtstrahlen auf. Der erste der aufgeteilten Lichtstrahlen läuft als erster Zentralstrahl 112 bzw. als ersten Lichtstrahl 160 zum ersten Strahlumlenkelement 104 und der zweite aufgeteilte Lichtstrahl läuft als zweiter Zentralstrahl 118 bzw. als zweiter Lichtstrahl 162 zum zweiten Strahlumlenkelement 106.

Die auf den Strahlteiler 172 fallende Lichtwelle wird am Strahlteiler 172 in zwei gleichphasige Lichtwellen mit unterschiedlichen Amplituden aufgeteilt. Die beiden aufgeteilten Amplituden können unterschiedlich, jedoch zum Beispiel auch gleich groß sein. Diese Aufstellung der Amplitude einer einzigen Lichtquelle wird im Fachjargon auch "Division of Amplitude" genannt.

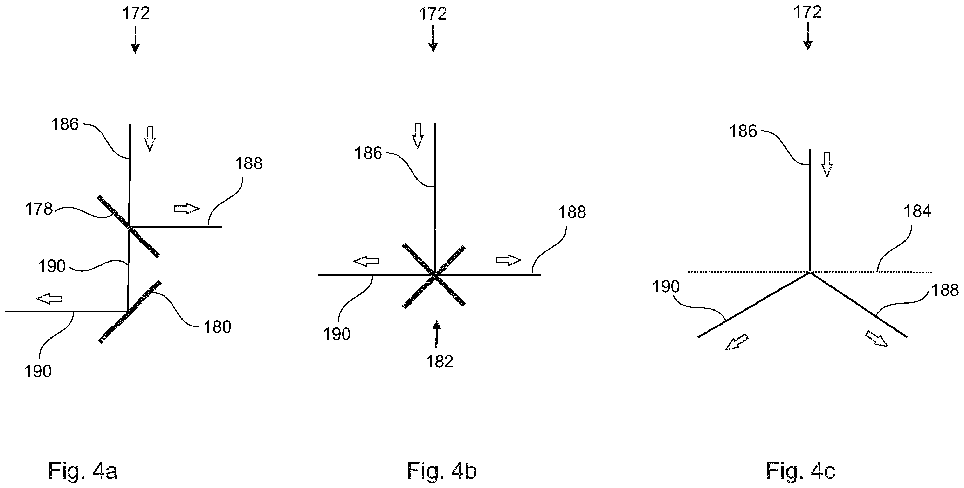

Verschiedene Ausführungsformen für Strahlteiler 172 sind in Figur 4 dargestellt.

In Figur 4a ist der Strahlteiler 172 als eine Kombination aus einem Strahlteiler 178 und einem Spiegel 180 realisiert.

Ein einfallender Lichtstrahl 186 fällt entlang der eingezeichneten Pfeilrichtung auf den Strahlteiler 178 ein und wird dort in den ersten ausfallenden Lichtstrahl 188 und den zweiten ausfallenden Lichtstrahl 190 aufgespalten. Der zweite ausfallende Lichtstrahl 190 kann optional an dem Spiegel 180 in eine andere Richtung gelenkt werden. Die Richtungen des ersten ausfallenden Lichtstrahls 188 und des zweiten ausfallenden Lichtstrahls 190 müssen nicht rechtwinklig zum einfallenden Lichtstrahl 186 sein, sondern können in einem gewissen Intervall variieren. Ein Winkel zwischen dem einfallenden Lichtstrahl 186 und dem ersten ausfallenden Lichtstrahl 188 bzw. dem zweiten ausfallenden Lichtstrahl 190 kann zum Beispiel zwischen 20° und 160° liegen.

In Figur 4b ist der Strahlteiler 172 durch einen kombinierten Strahlteiler 182 realisiert. Der kombinierte Strahlteiler 182 besteht aus zwei zueinander gekreuzt stehenden halbdurchlässigen Spiegeln, die sich zudem durchdringen. Ein auf den kombinierten Strahlteiler 182 einfallender Lichtstrahl 186 wird somit in einen ersten ausfallenden Lichtstrahl 188 und einen zweiten ausfallenden Lichtstrahl 190 aufgeteilt. Ferner gibt es Verluste durch Rückreflexionen und Licht, das entlang der Richtung des einfallenden Lichtstrahls 186 durch die halbdurchlässigen Spiegel des kombinierten Strahlteilers 182 hindurch tritt.

In Figur 4c ist der Strahlteiler 172 durch ein Beugungsgitter 184 realisiert. Der auf das Beugungsgitter 184 einfallende Lichtstrahl 186 wird in mehrere Beugungsordnungen gebeugt. Moderne Beugungsgitter können so gefertigt werden, dass das Licht hauptsächlich in die erste und die minus-erste Ordnung gebeugt wird und die nicht eingezeichnete nullte Ordnung im Wesentlichen unterdrückt ist. Somit kann der erste ausfallende Lichtstrahl 188 die erste Beugungsordnung und der zweite ausfallende Lichtstrahl 190 die minus-erste Beugungsordnung darstellen. Dies kann selbstverständlich auch gerade umgekehrt sein. Der Winkel zwischen dem einfallenden Lichtstrahl 186 und den Beugungsordnungen hängt unter anderem von der Gitterkonstanten des verwendeten Beugungsgitter und der Wellenlänge des verwendeten Lichts ab.

Figur 5 zeigt verschiedene Ausführungsformen für Einrichtungen 176 zur Strahlzusammenführung.

In Figur 5a ist die Einrichtung 176 zur Strahlzusammenführung als eine Kombination aus einem Spiegel 180 und einem Strahlteiler 178 realisiert. Ein erster einfallender Lichtstrahl 192 wird mittels eines Spiegels 180 auf eine Seite eines Strahlteilers 178 gelenkt und der zweite einfallende Strahl 194 wird auf die andere Seite des Strahlteilers 178 gelenkt. Durch den Strahlteiler 178 werden der erste einfallende Strahl 192 und der zweite einfallende Lichtstrahl 194 zu einem ausfallenden Lichtstrahl 196 vereinigt bzw. zusammengeführt. Hierbei müssen die Richtungen des ersten einfallenden Strahl 192 und des zweiten einfallenden Lichtstrahls 194 relativ zur Ausrichtung des Strahlteilers 178 so gewählt werden, dass die Ausbreitungsrichtung des reflektierten zweiten einfallenden Lichtstrahls 194 parallel zur Ausbreitungsrichtung des vom Spiegel 180 reflektierten ersten einfallenden Strahl 192 ist, da nur dann beide Strahlen überlagert sind. Ferner gibt es Verluste am Strahlteiler 178 durch Licht, welches vom zweiten einfallenden Lichtstrahl 194 durch den Strahlteiler 178 hindurch tritt und dadurch verloren geht.

In Figur 5b ist die Einrichtung 176 zur Strahlzusammenführung durch einen kombinierten Strahlteiler 182 realisiert. Der kombinierte Strahlteiler 182 besteht aus zwei zueinander gekreuzt stehenden halbdurchlässigen Spiegeln, die sich zudem durchdringen. Durch die beiden halbdurchlässigen Spiegel werden der erste einfallende Strahl 192 und der zweite einfallende Lichtstrahl 194 zu einem ausfallenden Lichtstrahl 196 vereinigt bzw. zusammengeführt. In diesem Fall gibt es auch Lichtverluste durch Rückreflexe und Reflexionen entgegen der Richtung des ausfallenden Lichtstrahls 196.

In Figur 5c ist die Einrichtung zur Strahlzusammenführung 176 durch ein Beugungsgitter 184 realisiert. Dies entspricht einer Umkehrung des Strahlteilers 178 aus Figur 4c. Somit entsprechen der erste einfallende Lichtstrahl 192 und der zweite einfallende Lichtstrahl 194 der ersten und minus-ersten Beugungsordnung des Gitters. Der auslaufende Lichtstrahl 196 der Figur 5c entspricht dem einfallenden Lichtstrahl 186 der Figur 4c. In diesem Fall gibt es auch Lichtverluste durch Beugung in andere Ordnungen, welche jedoch aus Gründen der Übersichtlichkeit nicht dargestellt sind.

Figur 6 zeigt eine Ausführungsform eines Interferometers 100. Die Ausführungsform der Figur 6 realisiert das Prinzip der "Division of Wavefront". In Figur 6 verlaufen der erste Zentralstrahl 112 und der zweite Zentralstrahl 118, welche beide vom nicht dargestellten zentralen Bildpunkt 154 emittiert sind, entlang der negativen z-Achse und treffen jeweils auf das erste Strahlumlenkelement 104 und das zweite Strahlumlenkelement 106. Der erste Zentralstrahl 112 wird vom ersten Strahlumlenkelement 104 in die Richtung der x-Achse gelenkt und der zweite Zentralstrahl 118 wird vom zweiten Strahlumlenkelement 106 in die Richtung der negativen x-Achse gelenkt.

Vorliegend sind der erste Zentralstrahl 112 und der zweite Zentralstrahl 118 jeweils parallel zur z-Achse eingezeichnet. Dies bedeutet, dass das abzubildende Objekt 156 im Unendlichen liegt. Die vorliegende Erfindung funktioniert jedoch grundsätzlich auch mit abzubildenden Objekten 156, welche einen endlichen Abstand zum Interferometer 100 aufweisen. In diesem Fall wären der erste Zentralstrahl 112 und der zweite Zentralstrahl 118 nicht parallel zueinander.

Nachfolgend wird der erste Zentralstrahl 112 vom dritten Strahlumlenkelement 108, welches am Ursprung des hier gewählten Koordinatensystems liegt, in die Richtung der y-Achse umgelenkt, woraufhin der erste Zentralstrahl 112 auf einen Detektor 125 mit einer Detektionsebene 126 trifft. Der Detektor 125 weist in dem vorliegenden Ausführungsbeispiel eine zweidimensionale Anordnung bzw. Array von CMOS-Sensoren auf.

Der zweite Zentralstrahl 118 wird, nachdem er vom zweiten Strahlumlenkelement 106 in Richtung der negativen x-Achse abgelenkt wurde, vom vierten Strahlumlenkelement 110 ebenfalls wie der erste Zentralstrahl 112 in Richtung der y-Achse abgelenkt. Da das dritte Strahlumlenkelement 108 als halbdurchlässiger Spiegel ausgestaltet ist, können somit der erste Zentralstrahl 112 und der zweite Zentralstrahl 118, vom vierten Strahlumlenkelement 110 kommend gesehen, hinter dem dritten Strahlumlenkelement 108 überlagert werden. Der Überlagerungspunkt 157 befindet sich somit auf dem dritten Strahlumlenkelement 108 oder auf der Halbgeraden hinter dem dritten Strahlumlenkelement 108 auf einer beliebigen Position der y-Achse. Wie vorstehend beschrieben kann an dem Überlagerungspunkt 157 eine $k_{senkrecht}$=0-Interenz zwischen dem ersten Zentralstrahl 112 und dem zweiten Zentralstrahl 118 detektiert werden.

Ein erster Lichtstrahl 160 bzw. ein zweiter Lichtstrahl 162 wird ebenso wie der erste Zentralstrahl 112 bzw. der zweite Zentralstrahl 118 über mehrere Reflexionen auf den Detektor 125 gelenkt. Jedoch stimmt die Ausbreitungsrichtung des ersten Lichtstrahls 160 bzw. des zweiten Lichtstrahls 162 nicht mit der Ausbreitungsrichtung des ersten Zentralstrahls 112 bzw. des zweiten Zentralstrahls 118 überein.

Falls die Ausbreitungsrichtung des ersten Lichtstrahls 160 bzw. des zweiten Lichtstrahls 162 im Vergleich zur Ausbreitungsrichtung des ersten Zentralstrahls 112 bzw. des zweiten Zentralstrahls 118 von der negativen z-Achse weg entlang der xy-Ebene abweicht, führt dies nach den Reflexionen an den Strahlumlenkelementen dazu, dass der erste Lichtstrahl 160 sich im Wesentlichen entlang der y-Achse ausbreitet, jedoch auch eine kleine Komponente entlang der xz-Achse aufweist und der zweite Lichtstrahl 162 sich ebenfalls im Wesentlichen entlang der y-Achse ausbreitet und ebenfalls eine kleine Komponente entlang der xz-Achse aufweist, welche jedoch genau entgegengesetzt zur entsprechenden Komponente des ersten Lichtstrahls 160 ist. Man kann somit sagen, dass die senkrechte Wellenvektorkomponente des ersten Lichtstrahls 160 am Überlagerungspunkt 157 genau entgegengesetzt gleich groß ist wie die entsprechende senkrechte Wellenvektorkomponente des zweiten Lichtstrahls 162. Dies kann im vorliegenden Fall durch einfaches Nachrechnen verifiziert werden. Die vorliegende Ausführungsform der Figur 6 ist demnach ein konkreter Nachweis dafür, dass es eine Vorrichtung gibt, welche die z.B. in Figur 1 dargestellte Eigenschaft hat, dass eine beliebige Abweichung in einer zur Ausbreitungsrichtung senkrechten Ebene eines auf ein Interferometer einfallenden Lichtstrahls dazu führt, dass das Licht in den beiden aufgespaltenen Interferometerarmen entgegengesetzt gleich große senkrechte Komponenten hat. Aus Gründen der Übersichtlichkeit, sind die kleinen Abweichungen zwischen dem ersten Lichtstrahl 160 bzw. dem zweiten Lichtstrahls 162 vom ersten Zentralstrahl 112 bzw. vom zweiten Zentralstrahl 118 nicht dargestellt.

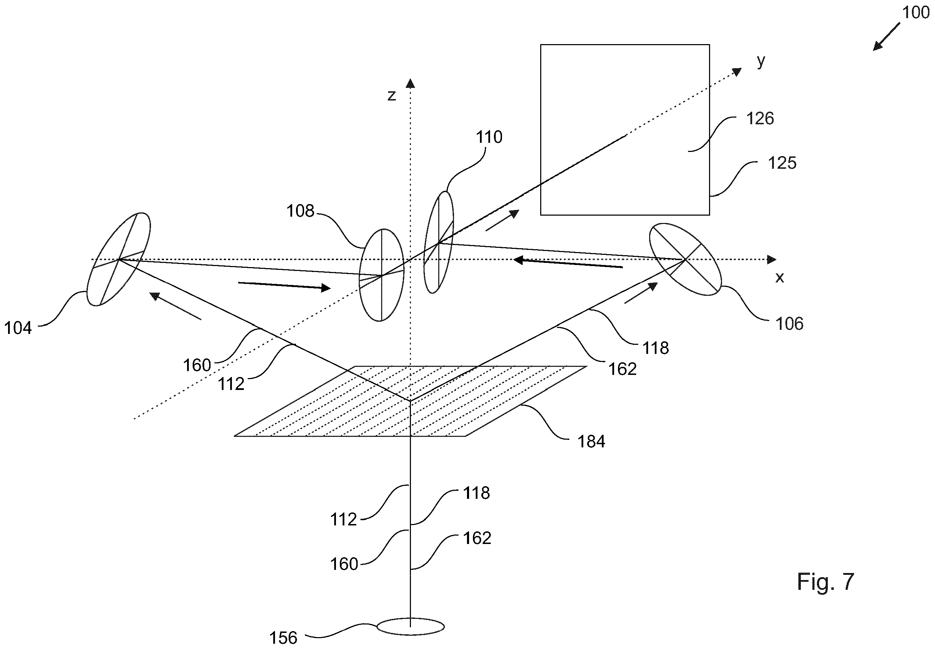

Figur 7 zeigt eine weitere Ausführungsform eines Interferometers 100. Im Gegensatz zur Ausführungsform der Figur 6 wird in dieser Ausführungsform das Prinzip der "Division of Amplitude" realisiert. Das von dem abzubildenden Objekt 156 ausgehende Licht wird von dem Beugungsgitter 184 in eine erste und eine minus-erste Beugungsordnung gebeugt. Das in die erste Beugungsordnung gebeugte Licht fällt sodann auf das erste Strahlumlenkelement 104 und das in die minus-erste Beugungsordnung gebeugte Licht fällt auf das zweite Strahlumlenkelement 106.

Zwischen dem abzubildenden Objekt 156 und dem Beugungsgitter 184 fallen der erste Zentralstrahl 112 und der zweite Zentralstrahl 118 zusammen. Nach dem Beugungsgitter 184 tritt der erste Zentralstrahl 112 nach der Reflektion an dem ersten Strahlumlenkelement 104, einer weiteren Reflexion an dem dritten Strahlumlenkelement 108 durch das vierte Strahlumlenkelement 110, welches als halbdurchlässiger Spiegel ausgeführt ist, hindurch und trifft schlussendlich auf den Detektor 125 mit der Detektionsebene 126. Nach dem Beugungsgitter 184 trifft der zweite Zentralstrahl 118 nach der Reflektion an dem zweiten Strahlumlenkelement 106 und einer weiteren Reflexion an dem vierten Strahlumlenkelement 110 auf den Detektor 125. Das als halbdurchlässiger Spiegel ausgeführte vierte Strahlumlenkelement 110 wird dazu benutzt, den ersten Zentralstrahl 112 und den zweiten Zentralstrahl 118 zu überlagern. Da das vierte Strahlumlenkelement 110 als halbdurchlässiger Spiegel ausgeführt ist, treten in beiden Armen unvermeidbare Verluste auf. Der erste Lichtstrahl 160 verläuft ebenso wie der erste Zentralstrahl 112, hat jedoch kleine Abweichungen gegenüber diesem. Der zweite Lichtstrahl 162 verläuft ebenso wie der zweite Zentralstrahl 118, hat jedoch kleine Abweichungen gegenüber diesem. Diese Ausführungsform erlaubt eine besonders leichte und kompakte Bauweise des Interferometers.

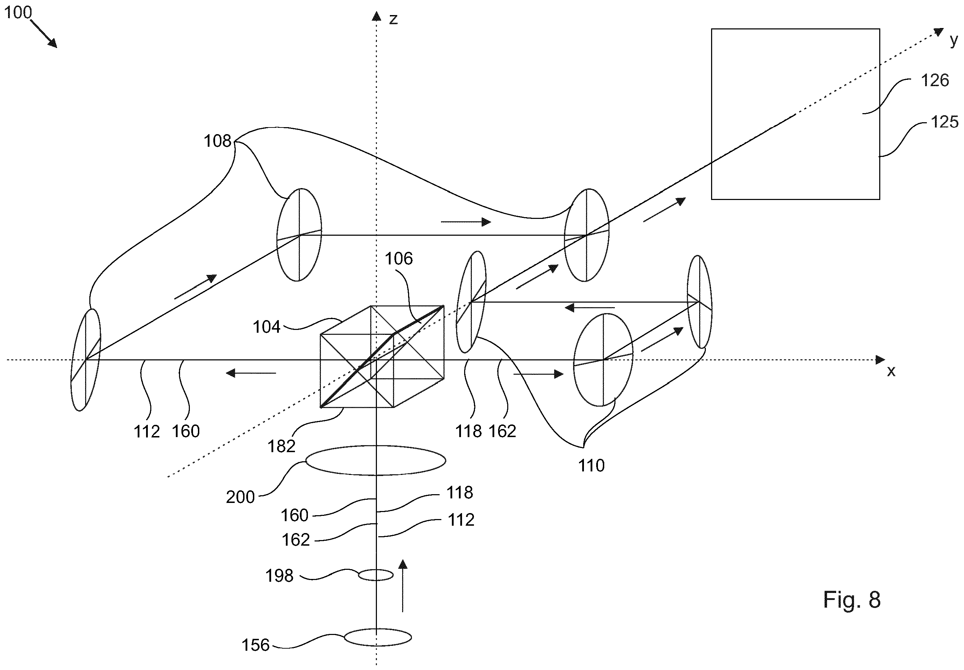

Figur 8 zeigt eine weitere Ausführungsform eines Interferometers 100, welches zum Beispiel als Strahlaufweiter bzw. Mikroskop verwendet werden kann. Das Interferometer der Fig. 8 weist zwei Linsen auf und ist somit nicht in einem Verfahren nach der beanspruchten Erfindung einzusetzen. Der Einfachheit halber werden nur die Zentralstrahlen des Systems beschrieben. Der von dem abzubildenden Objekt 156 ausgehende erste Zentralstrahl 112 und der mit diesem zusammenfallende zweite Zentralstrahl 118 werden durch einen Strahlaufweiter bzw. beam expander ausgeweitet. Der Strahlaufweiter der Ausführungsform der Figur 8 weist unter anderem eine Linse 198 und eine dahinter angeordnete Linse 200 mit einer größeren Brennweite auf. Es können jedoch auch andere im Stand der Technik bekannte Strahlaufweiter benutzt werden. Der so aufgeweitete Lichtstrahl fällt sodann auf einen kombinierten Strahlteiler 182, welcher das erste Strahlumlenkelement 104 und das zweite Strahlumlenkelement 106 in sich vereint. Das von dem kombinierten Strahlteiler 182 entlang der negativen x-Richtung abgelenkte Licht weist unter anderem den ersten Zentralstrahl 112 auf, und das von dem kombinierten Strahlteiler 182 entlang der x-Richtung abgelenkte Licht weist unter anderem den zweiten Zentralstrahl 118 auf. Der erste Zentralstrahl 112 fällt nach dem kombinierten Strahlteiler 182 auf drei weitere Spiegel, welche insgesamt als das dritte Strahlumlenkelement 108 bezeichnet werden. Der zweite Zentralstrahl 118 fällt nach dem kombinierten Strahlteiler 182 auf drei weitere Spiegel, welche insgesamt als das vierte Strahlumlenkelement 110 bezeichnet werden. Der jeweils letzte Spiegel des dritten Strahlumlenkelements 108 und des vierten Strahlumlenkelements 110 werden benutzt, um den ersten Zentralstrahl 112 und den zweiten Zentralstrahl 118 zu überlagern. Die Überlagerung des ersten Zentralstrahls 112 und des zweiten Zentralstrahls 118 trifft schließlich auf den Detektor 125, wo das Interferogramm des ersten Zentralstrahls 112 und des zweiten Zentralstrahls 118 detektiert werden kann. Der erste Lichtstrahl 160 und der zweite Lichtstrahl 162 verlaufen in dieser Ausführungsform analog wie in Figur 7.

Figur 9a zeigt eine weitere Ausführungsform eines Interferometers 100, welches in einer ähnlichen Form bereits als Prototyp im Labor realisiert worden ist. Figur 9b verdeutlicht die dreidimensionale Anordnung und Bauweise eines Teils des Interferometers 100.

Licht eines nicht dargestellten abzubildenden Objektes 156 verläuft entlang der negativen z-Achse und trifft sodann auf zwei Anordnungen von gekreuzten D-Spiegeln. Die z-Achse steht senkrecht auf der Zeichenebene und bildet mit den eingezeichneten x- und y-Achsen ein Rechtssystem bzw. rechtshändiges System. Eine erste Anordnung 202 von zwei D-Spiegeln weist einen ersten D-Spiegel 206 und einen zweiten D-Spiegel 208 auf. Ferner weist eine zweite Anordnung 204 von zwei D-Spiegeln einen dritten D-Spiegel 210 und ein vierten D-Spiegel 212 auf.

Die zweite Anordnung 204 von zwei D-Spiegeln ist in Figur 9b dreidimensional dargestellt. Die zweite Anordnung 204 von zwei D-Spiegeln weist den dritten D-Spiegel 210 und den vierten D-Spiegel 212 auf.

Der dritte D-Spiegel 210 weist auf: ein dielektrisches Medium mit einer ebenen Lichteinfallsfläche und einem Brechungsindex größer als 1,3, und zwei der Lichteinfallsfläche nachgeordnete Spiegelelemente zur Ablenkung des Lichtstrahls in einen ausfallenden Lichtstrahl, wobei die bevorzugt drehbaren Spiegelelemente jeweils benachbart zueinander angeordnet sind und in einer zur Lichteinfallsfläche parallelen Ebene liegen. Ferner weisen die Spiegelelemente jeweils eine ebene reflektierende Oberfläche auf und das dielektrische Medium füllt den Raum zwischen den reflektierenden Flächen der Spiegelelemente und der Lichteinfallsfläche vollständig aus. Darüber hinaus weisen die Spiegelelemente eine Ausdehnung größer als 0,1 mm auf. Die restlichen D-Spiegel 206, 208 und 212 sind baugleich zum dritten D-Spiegel 210.

Die beiden D-Spiegel einer Anordnung von zwei D-Spiegeln stehen senkrecht aufeinander. Dies bedeutet z.B. für die in Figur 9b abgebildete Anordnung 204 von zwei D-Spiegeln, dass ein auf der Lichteinfallsfläche des dritten D-Spiegel 210 stehendes Lot mit einem auf der Lichteinfallsfläche des vierten D-Spiegel 212 stehenden Lot einen Winkel von 90° bildet.

Der erste D-Spiegel 206 und der zweite D-Spiegel 208 sind so angeordnet, dass ein einfallender Lichtstrahl zunächst auf den ersten D-Spiegel 206 trifft und dann von dem ersten D-Spiegel 206 auf den zweiten D-Spiegel 208 gelenkt wird.

Der dritte D-Spiegel 210 und der vierte D-Spiegel 212 sind so angeordnet, dass ein einfallender Lichtstrahl zunächst auf den dritten D-Spiegel 210 trifft und dann von dem dritten D-Spiegel 210 auf den vierten D-Spiegel 212 gelenkt wird.

Die Lichteinfallsflächen des ersten D-Spiegels 206 und des dritten D-Spiegels 210 sind parallel zur xy-Ebene und die Lichteinfallflächen des zweiten D-Spiegels 208 und des vierten D-Spiegels 212 sind parallel zur yz-Ebene.

Das auf der Lichteinfallsfläche des ersten D-Spiegels 206 stehende Lot bildet mit dem auf der Lichteinfallsfläche des zweiten D-Spiegels 208 stehenden Lot einen Winkel von 90°.

Das auf der Lichteinfallsfläche des dritten D-Spiegels 210 stehende Lot bildet mit dem auf der Lichteinfallsfläche des vierten D-Spiegels 212 stehenden Lot einen Winkel von 90°.

Das auf der Lichteinfallsfläche des ersten D-Spiegels 206 stehende Lot und das auf der Lichteinfallsfläche des dritten D-Spiegels 210 stehende Lot sind parallel und verlaufen entlang der z-Achse.

Das auf der Lichteinfallsfläche des zweiten D-Spiegels 208 stehende Lot und das auf der Lichteinfallsfläche des vierten D-Spiegels 212 stehende Lot sind antiparallel, wobei das auf der Lichteinfallsfläche des zweiten D-Spiegels 208 stehende Lot entlang der negativen x-Achse und das auf der Lichteinfallsfläche des vierten D-Spiegels 212 stehende Lot entlang der x-Achse verläuft.

Die oberen Kanten der Lichteinfallfläche des ersten D-Spiegels 206 und des dritten D-Spiegels 210 sind im Wesentlichen auf derselben Höhe der z-Achse wie eine untere Kante des zweiten D-Spiegels 208 und des vierten D-Spiegels 212.

Der erste D-Spiegel 206, der zweite D-Spiegel 208, der dritte D-Spiegel 210 und der vierte D-Spiegel 212 weisen eine Grundfläche von 10mm auf 10mm auf.

Das von dem abzubildenden Objekt 156 auf die erste Anordnung 202 von zwei D-Spiegeln oder auf die zweite Anordnung 204 von zwei D-Spiegeln fallende Licht ist in Figur 9a mit jeweils einen Kreis, in dem sich ein Kreuz befindet gekennzeichnet. Dieses Zeichen bedeutet, dass der jeweilige Lichtstrahl in die Zeichenebene hinein läuft. Dies kann gut an der dreidimensionalen Darstellung der Figur 9b erkannt werden. Das Licht fällt hierbei über die gesamte Fläche des ersten D-Spiegels 206 und des dritten D-Spiegels 210 ein.

Das von dem abzubildenden Objekt 156 auf die erste Anordnung 202 von zwei D-Spiegeln fallende Licht trifft zuerst auf den ersten D-Spiegel 206, wird sodann entlang der positiven z-Achse und der positiven x-Achse auf den zweiten D-Spiegel 208 gelenkt, um danach entlang der negativen x-Achse und der positiven y-Achse auf zwei Umlenkspiegel 214, 216 zu treffen und schlussendlich auf den Detektor 125 detektiert zu werden.

Das von dem abzubildenden Objekt 156 auf die zweiten Anordnung 204 von zwei D-Spiegeln fallende Licht trifft zuerst auf den dritten D-Spiegel 210, wird sodann entlang der positiven z-Achse und der negativen x-Achse auf den vierten D-Spiegel 212 gelenkt, um danach entlang der positiven x-Achse und der negativen y-Achse auf einen Umlenkspiegel 218 zu treffen, um von diesem auf den Strahlteiler 220 zu treffen und vom Strahlteiler 220 entlang der positiven x-Achse und negativen y-Achse abgelenkt und schlussendlich auf den Detektor 125 detektiert zu werden. Der erste Zentralstrahl 112 verläuft über die erste Anordnung 202 von zwei D-Spiegeln und die Umlenkspiegel 214, 216 zum Detektor 125 und der zweite Zentralstrahl 118 verläuft über die zweite Anordnung 204 von zwei D-Spiegeln und den Strahlteiler 220 zum Detektor 125. Der Strahlteiler 220 kann bevorzugt entlang der y-Achse verschoben werden, was z.B. mithilfe eines Piezoelements bewirkt werden kann. Der erste Lichtstrahl 160 und der zweite Lichtstrahl 162 verlaufen im Wesentlichen parallel zum ersten Zentralstrahl 112 bzw. zum zweiten Zentralstrahl 118.

Für die Ausführungsform der Figur 9 ist die Bildrekonstruktion besonders einfach und kann über eine inverse Fourier-Transformation erfolgen.

Bezugszeichenliste

| | |
|---|---|
| 100 | Interferometer |
| 104 | erstes Strahlumlenkelement |
| 106 | zweites Strahlumlenkelement |
| 108 | drittes Strahlumlenkelement |
| 110 | viertes Strahlumlenkelement |
| 112 | erster Zentralstrahl |
| 118 | zweiter Zentralstrahl |
| 125 | Detektor |
| 126 | Detektionsebene |
| 150 | erster Interferometerarm |
| 152 | zweiter Interferometerarm |
| 154 | zentraler Bildpunkt |
| 156 | abzubildendes Objekt |
| 157 | Überlagerungspunkt |
| 158 | Bildpunkt |
| 159 | Spiegel |
| 160 | erster Lichtstrahl |
| 161 | halbdurchlässiger Spiegel |
| 162 | zweiter Lichtstrahl |
| 164 | zum ersten Zentralstrahl senkrechte Wellenvektorkomponente |
| 166 | zum zweiten Zentralstrahl senkrechte Wellenvektorkomponente |
| 172 | Strahlteiler |
| 176 | Einrichtung zur Strahlzusammenführung |
| 178 | Strahlteiler |
| 180 | Spiegel |
| 182 | kombinierter Strahlteiler |
| 184 | Beugungsgitter |
| 186 | einfallender Lichtstrahl |
| 188 | erster ausfallender Lichtstrahl |
| 190 | zweiter ausfallender Lichtstrahl |
| 192 | erster einfallender Lichtstrahl |
| 194 | zweiter einfallender Lichtstrahl |
| 196 | ausfallender Lichtstrahl |
| 198 | Linse |
| 200 | Linse |
| 202 | Anordnung von zwei D-Spiegeln |
| 204 | Anordnung von zwei D-Spiegeln |
| 206 | erster D-Spiegel |
| 208 | zweiter D-Spiegel |
| 210 | dritter D-Spiegel |
| 212 | vierter D-Spiegel |
| 214 | Umlenkspiegel |
| 216 | Umlenkspiegel |
| 218 | Umlenkspiegel |
| 220 | Strahlteiler |

**Patentansprüche**

1. Verfahren zur Rekonstruktion eines Urbildes (156) mit einem Interferometer (100),

wobei das Interferometer (100) ein linsenloses dreidimensionales Interferometer (100) ist, aufweisend:

    • einen ersten Interferometerarm (150) aufweisend ein erstes Strahlumlenkelement (104) und ein drittes Strahlumlenkelement (108),
    • einen zweiten Interferometerarm (152) aufweisend ein zweites Strahlumlenkelement (106) und ein viertes Strahlumlenkelement (110);
    • und einen Detektor (125);

wobei das Urbild (156) Licht mindestens einer Wellenlänge (As) emittiert, wobei von einem zentralen Bildpunkt (154) des Urbildes (156) ein erster Zentralstrahl (112) und ein zweiter Zentralstrahl (118) ausgehen und von einem Bildpunkt (158) des Urbildes (156) ein erster Lichtstrahl (160) und ein zweiter Lichtstrahl (162) ausgehen;

wobei der erste Zentralstrahl (112) und der erste Lichtstrahl (160) den ersten Interferometerarm (150) durchlaufen und der zweite Zentralstrahl (118) und der zweite Lichtstrahl (162) den zweiten Interferometerarm (152) durchlaufen;

wobei der erste Zentralstrahl (112) und der zweite Zentralstrahl (118) nach Durchlaufen des ersten bzw. zweiten Interferometerarms (150, 152) überlagert werden, wobei die Ausbreitungsrichtung des ersten Zentralstrahls (112) und des zweiten Zentralstrahls (118) identisch sind, und an einem Überlagerungspunkt (157) des ersten Zentralstrahls (112) und des zweiten Zentralstrahls (118) eine $k_{senkrecht}$=0-Interferenz erzeugen, wobei eine $k_{senkrecht}$=0-Interferenz eine Interferenz des ersten Zentralstrahls (112) und des zweiten Zentralstrahls (118) ist, bei der die Wellenvektoren des ersten Zentralstrahls (112) und des zweiten Zentralstrahls (118) dieselbe Richtung aufweisen;

wobei sich der erste Lichtstrahl (160) und der zweite Lichtstrahl (162) nach Durchlaufen des ersten bzw. zweiten Interferometerarms (150, 152) an dem Überlagerungspunkt (157) des ersten Zentralstrahls (112) und des zweiten Zentralstrahls (118) überlappen, wobei die Ausbreitungsrichtung des ersten Lichtstrahls (160) und des zweiten Lichtstrahls (162) nicht identisch sind;

wobei an dem Überlagerungspunkt (157) eine zum ersten Zentralstrahl (112) senkrechte Wellenvektorkomponente (164) des ersten Lichtstrahls (160) und eine zum zweiten Zentralstrahl (118) senkrechte Wellenvektorkomponente (166) des zweiten Lichtstrahls (162) entgegengesetzt sind;

wobei der erste Zentralstrahl (112) und der erste Lichtstrahl (160) im ersten Interferometerarm (150) auf das erste Strahlumlenkelement (104) und danach auf das dritte Strahlumlenkelement (108) treffen und der zweite Zentralstrahl (118) und der zweite Lichtstrahl (162) im zweiten Interferometerarm (152) auf das zweite Strahlumlenkelement (106) und danach auf das vierte Strahlumlenkelement (110) treffen;

wobei der Überlagerungspunkt (157) auf einer Detektionsebene (126) des Detektors (125) liegt und mit dem Detektor (125) ein Bild gemessen wird;

wobei für mindestens eine optische Weglängendifferenz ($\delta_t$) zwischen dem ersten Interferometerarm (150) und dem zweiten Interferometerarm (152) und für mindestens eine von dem Urbild emittierte Wellenlänge ($\lambda_s$) nachfolgende Schritte durchgeführt werden:

    • Erstellen einer Pixel-Rasterung (i, j) für das Urbild (156);
    • Erstellen einer Pixel-Rasterung (m, n) für das Bild;
    • Ermitteln einer Matrix ($M_{m,n,t}$), welche für jeden der Pixel der Pixel-Rasterung (m, n) des Bildes eine gemessene Intensität ($\Phi_{m,n,t}$) eines Pixel der Pixel-Rasterung (m, n) des Bildes durch Multiplikation der gemessenen Intensität ($\Phi_{m,n,t}$) mit der Matrix ($M_{m,n,t}$) in eine Intensität ($I_{i,j,s}$) der Pixel der Pixel-Rasterung (i, j) des Urbildes (156) überführt;
    • Erfassen von Intensitäten von Pixeln der Pixel-Rasterung (m, n) eines gemessenen Bildes; und
    • Berechnen von Intensitäten von Pixeln einer Pixel-Rasterung (i, j) des Urbildes (156) auf Basis der erfassten Intensitäten der Pixel der Pixel-Rasterung (m, n) des Bildes.

2. Verfahren nach Anspruch 1,
**dadurch gekennzeichnet, dass**
an dem Überlagerungspunkt (157) die zum ersten Zentralstrahl (112) senkrechte Wellenvektorkomponente (164) des ersten Lichtstrahls (160) und die zum zweiten Zentralstrahl (118) senkrechte Wellenvektorkomponente (166) des zweiten Lichtstrahls (162) entgegengesetzt gleich groß sind.

3. Verfahren nach Anspruch 1,
**dadurch gekennzeichnet, dass**
mindestens eines aus der Menge des ersten Strahlumlenkelements (104), des dritten Strahlumlenkelements (108), des zweiten Strahlumlenkelements (106) und des vierten Strahlumlenkelements (110) mindestens ein diffraktives optisches Element (DOE), insbesondere ein Gitter, und/oder mindestens ein erstes dielektrisches Medium und/oder einen D-Spiegel aufweist.

4. Verfahren nach einem der vorhergehenden Ansprüche,
**dadurch gekennzeichnet, dass**

das erste Strahlumlenkelement (104) in einer Anordnungsebene angeordnet ist, die durch das erste Strahlumlenkelement (104) und eine zu einer optischen Achse senkrechte Ebene aufgespannt ist, wobei die optische Achse ausgehend vom zentralen Bildpunkt (154) durch die Winkelhalbierende zwischen dem ersten Zentralstrahl (112) und den zweiten Zentralstrahl (118) gegeben ist,
das zweite Strahlumlenkelement (106) so angeordnet ist, dass der Abstand des zweiten Strahlumlenkungselements (106) zur Anordnungsebene kleiner als der Abstand des zweiten Strahlumlenkungselements (106) von der optischen Achse ist;
das dritte Strahlumlenkungselement (108), das vierte Strahlumlenkungselement (110) und der Überlagerungspunkt (157) so angeordnet sind, dass der Abstand des dritten Strahlumlenkungselements (108), des vierten Strahlumlenkungselements (110) und des Überlagerungspunktes (157) von der Anordnungsebene jeweils kleiner als der Abstand des dritten Strahlumlenkungselements (108) von der optischen Achse ist.

5. Verfahren nach einem der vorhergehenden Ansprüche,
**dadurch gekennzeichnet, dass**

das erste Strahlumlenkelement (104) in einer Anordnungsebene angeordnet ist, die durch das erste Strahlumlenkelement (104) und eine zu einer optischen Achse senkrechte Ebene aufgespannt ist, wobei die optische Achse ausgehend vom zentralen Bildpunkt (154) durch die Winkelhalbierende zwischen dem ersten Zentralstrahl (112) und den zweiten Zentralstrahl (118) gegeben ist,
das zweite Strahlumlenkelement (106) so angeordnet ist, dass
eine Verbindungslinie zwischen dem Auftreffpunkt des ersten Zentralstrahls (112) auf dem ersten Strahlumlenkelement (104) und dem Auftreffpunkt des zweiten Zentralstrahls (118) auf dem zweiten Strahlumlenkelement (106) und die Anordnungsebene einen Winkel kleiner oder gleich 30° einschließen;
das dritte Strahlumlenkelement (108) so angeordnet ist, dass
der erste Zentralstrahl (112) zwischen dem ersten Strahlumlenkelement (104) und dem dritten Strahlumlenkelement (108) und die Anordnungsebene einen Winkel kleiner oder gleich 30° einschließen;
das vierte Strahlumlenkelement (110) so angeordnet ist, dass
der zweite Zentralstrahl (118) zwischen dem zweiten Strahlumlenkelement (106) und dem vierten Strahlumlenkelement (110) und die Anordnungsebene einen Winkel kleiner oder gleich 30° einschließen;
das dritte Strahlumlenkelement (108) und das vierte Strahlumlenkelement (110) so angeordnet sind, dass
die Verbindungslinie zwischen dem Auftreffpunkt des ersten Zentralstrahls (112) auf dem dritten Strahlumlenkelement (108) und dem Überlagerungspunkt (157) und/oder die Verbindungslinie zwischen dem Auftreffpunkt des zweiten Zentralstrahls (118) auf dem vierten Strahlumlenkelement (110) und dem Überlagerungspunkt (157) mit der Anordnungsebene jeweils einen Winkel kleiner oder gleich 30° einschließen.

6. Verfahren nach einem der vorhergehenden Ansprüche,
**dadurch gekennzeichnet, dass**

die optische Abbildung, die den ersten Zentralstrahl vor dem Auftreffen auf das erste Strahlumlenkelement (104) in den ersten Zentralstrahl (112) nach dem Auftreffen auf das erste Strahlumlenkelement (104) überführt, und
die optische Abbildung, die den zweiten Zentralstrahl (118) vor dem Auftreffen auf das zweite Strahlumlenkelement (106) in den zweiten Zentralstrahl (118) nach dem Auftreffen auf das zweite Strahlumlenkelement (106) überführt,
durch eine Drehung um einen Drehwinkel zwischen 150° und 210° um eine Rotationsachse und/oder eine Verschiebung entlang eines Verschiebungsvektors ineinander überführt werden können.

7. Verfahren nach einem der vorhergehenden Ansprüche, **dadurch gekennzeichnet, dass**
das erste Strahlumlenkelement (104) und das zweite Strahlumlenkelement (106) und/oder das dritte Strahlumlenkelement (108) und das vierte Strahlumlenkelement (110) in einer einzigen Vorrichtung enthalten sind.

8. Verfahren nach einem der vorhergehenden Ansprüche, **dadurch gekennzeichnet, dass**
zwischen dem abzubildenden Objekt (156) einerseits und dem ersten Interferometerarm (150) und dem zweiten Interferometerarm (152) andererseits mindestens ein Strahlteiler angeordnet ist.

9. Verfahren nach einem der vorhergehenden Ansprüche, **dadurch gekennzeichnet, dass** zwischen dem dritten Strahlumlenkungselement (108) und dem vierten Strahlumlenkungselement (110) einerseits und dem Überlagerungspunkt (157) andererseits mindestens eine Einrichtung (176) zur Strahlzusammenführung angeordnet ist.

10. Verfahren nach einem der vorhergehenden Ansprüche,

    **dadurch gekennzeichnet, dass**

    mindestens eines aus der Menge des ersten Strahlumlenkelements (104), des dritten Strahlumlenkelements (108), des zweiten Strahlumlenkelements (106) und des vierten Strahlumlenkelements (110) mindestens einen D-Spiegel aufweist, wobei der mindestens eine D-Spiegel aufweist:

    ein zweites dielektrisches Medium mit einer Lichteinfallsfläche und einem Brechungsindex größer als 1,3, und
    mindestens zwei der Lichteinfallsfläche nachgeordnete Spiegelelemente zur Ablenkung des Lichtstrahls in einen von dem mindestens einen D-Spiegel ausfallenden Lichtstrahl,
    wobei die Spiegelelemente jeweils benachbart zueinander angeordnet sind,
    wobei die Spiegelelemente jeweils eine ebene reflektierende Oberfläche aufweisen,
    wobei das zweite dielektrische Medium einen Raum zwischen den reflektierenden Flächen der Spiegelelemente und der Lichteinfallsfläche vollständig ausfüllt, und
    wobei die Spiegelelemente eine Ausdehnung größer als 0,1 mm aufweisen.

11. Verfahren nach einem der vorhergehenden Ansprüche,

    **dadurch gekennzeichnet, dass**

    der erste Interferometerarm (150) und/oder der zweite Interferometerarm (152) eine Vorrichtung zur Veränderung eines optischen Pfades des entsprechenden Interferometerarms (150, 152) aufweist.

12. Verfahren zur Kalibrierung eines Interferometers (100),

    wobei das Interferometer (100) ein linsenloses dreidimensionales Interferometer (100) ist, aufweisend:

    • einen ersten Interferometerarm (150) aufweisend ein erstes Strahlumlenkelement (104) und ein drittes Strahlumlenkelement (108),
    • einen zweiten Interferometerarm (152) aufweisend ein zweites Strahlumlenkelement (106) und ein viertes Strahlumlenkelement (110);
• und einen Detektor (125);

wobei ein Urbild (156) Licht mindestens einer Wellenlänge ($\lambda_S$) emittiert, wobei von einem zentralen Bildpunkt (154) des Urbildes (156) ein erster Zentralstrahl (112) und ein zweiter Zentralstrahl (118) ausgehen und von einem Bildpunkt (158) des Urbildes (156) ein erster Lichtstrahl (160) und ein zweiter Lichtstrahl (162) ausgehen;

wobei der erste Zentralstrahl (112) und der erste Lichtstrahl (160) den ersten Interferometerarm (150) durchlaufen und der zweite Zentralstrahl (118) und der zweite Lichtstrahl (162) den zweiten Interferometerarm (152) durchlaufen;

wobei der erste Zentralstrahl (112) und der zweite Zentralstrahl (118) nach Durchlaufen des ersten bzw. zweiten Interferometerarms (150, 152) überlagert werden, wobei die Ausbreitungsrichtung des ersten Zentralstrahls (112) und des zweiten Zentralstrahls (118) identisch sind, und an einem Überlagerungspunkt (157) des ersten Zentralstrahls (112) und des zweiten Zentralstrahls (118) eine $k_{senkrecht}$=0-Interferenz erzeugen, wobei eine $k_{senkrecht}$=0-Interferenz eine Interferenz des ersten Zentralstrahls (112) und des zweiten Zentralstrahls (118) ist, bei der die Wellenvektoren des ersten Zentralstrahls (112) und des zweiten Zentralstrahls (118) dieselbe Richtung aufweisen;

wobei sich der erste Lichtstrahl (160) und der zweite Lichtstrahl (162) nach Durchlaufen des ersten bzw. zweiten Interferometerarms (150, 152) an dem Überlagerungspunkt (157) des ersten Zentralstrahls (112) und des zweiten Zentralstrahls (118) überlappen, wobei die Ausbreitungsrichtung des ersten Lichtstrahls (160) und des zweiten Lichtstrahls (162) nicht identisch sind;

wobei an dem Überlagerungspunkt (157) eine zum ersten Zentralstrahl (112) senkrechte Wellenvektorkomponente (164) des ersten Lichtstrahls (160) und eine zum zweiten Zentralstrahl (118) senkrechte Wellenvektorkomponente (166) des zweiten Lichtstrahls (162) entgegengesetzt sind;

wobei der erste Zentralstrahl (112) und der erste Lichtstrahl (160) im ersten Interferometerarm (150) auf das erste Strahlumlenkelement (104) und danach auf das dritte Strahlumlenkelement (108) treffen und der zweite Zentralstrahl (118) und der zweite Lichtstrahl (162) im zweiten Interferometerarm (152) auf das zweite Strahlumlenkelement (106) und danach auf das vierte Strahlumlenkelement (110) treffen;

wobei der Überlagerungspunkt (157) auf einer Detektionsebene (126) des Detektors (125) liegt und mit dem Detektor (125) ein Bild gemessen wird;

wobei für mindestens eine optische Weglängendifferenz ($\delta_t$) zwischen dem ersten Interferometerarm (150) und dem zweiten Interferometerarm (152) und für mindestens eine von dem Urbild emittierte Wellenlänge ($\lambda_s$) nachfolgende Schritte durchgeführt werden:

• Erstellen einer Pixel-Rasterung (i, j) für das Urbild (156);
• Erstellen einer Pixel-Rasterung (m, n) für das Bild;
• nacheinander Erzeugen eines leuchtenden Pixels der Pixel-Rasterung des Urbildes (156) mit einer Norm-Intensität, wobei die restlichen Pixel dunkel sind, für jeden einzelnen Pixel der Pixel-Rasterung des Urbildes (156);
• für jeden leuchtenden Pixel der Pixel-Rasterung des Urbildes (156): Erfassen von Intensitäten ($\phi_{m,n,t}(i,j,s)$) der Pixel-Rasterung (m, n) des Bildes mit dem Detektor (125); und
• Ermitteln einer Matrix ($M_{m,n,t}$), welche für jeden der Pixel der Pixel-Rasterung (m, n) des Bildes eine gemessene Intensität ($\Phi_{m,n,t}$) eines Pixel der Pixel-Rasterung (m, n) des Bildes durch Multiplikation der gemessenen Intensität ($\Phi_{m,n,t}$) mit der Matrix ($M_{m,n,t}$) in eine Intensität ($I_{i,j,s}$) der Pixel der Pixel-Rasterung (i, j) des Urbildes (156) überführt.

**Claims**

1. Method for reconstructing an original image (156) using an interferometer (100), wherein the interferometer (100) is a lensless three-dimensional interferometer (100), comprising:

• a first interferometer arm (150) including a first beam deflecting element (104) and a third beam deflecting element (108),
• a second interferometer arm (152) including a second beam deflecting element (106) and a fourth beam deflecting element (110);
• and a detector (125);

wherein the original image (156) emits light of at least one wavelength ($\lambda_s$), wherein a first central beam (112) and a second central beam (118) originate from a central image point (154) of the original image (156) and a first light beam (160) and a second light beam (162) originate from an image point (158) of the original image (156);
wherein the first central beam (112) and the first light beam (160) pass through the first interferometer arm (150) and the second central beam (118) and the second light beam (162) pass through the second interferometer arm (152); wherein, after passing through the first or second interferometer arm (150, 152), the first central beam (112) and the second central beam (118) are superimposed, the directions of propagation of the first central beam (112) and the second central beam (118) being identical, and generate a $k_{perpendicular}=0$ interference at a superposition point (157) of the first central beam (112) and the second central beam (118), a $k_{perpendicular}=0$ interference being an interference between the first central beam (112) and the second central beam (118) in which the wave vectors of the first central beam (112) and the second central beam (118) have the same direction;
wherein, after passing through the first or second interferometer arm (150, 152), the first light beam (160) and the second light beam (162) overlap at the superposition point (157) of the first central beam (112) and the second central beam (118), the directions of propagation of the first light beam (160) and the second light beam (162) not being identical;
wherein, at the superposition point (157), a wave vector component (164) of the first light beam (160), which is perpendicular to the first central beam (112), and a wave vector component (166) of the second light beam (162), which is perpendicular to the second central beam (118), are opposed;
wherein the first central beam (112) and the first light beam (160) impinge in the first interferometer arm (150) on the first beam deflecting element (104) and thereafter on the third beam deflecting element (108), and the second central beam (118) and the second light beam (162) impinge in the second interferometer arm (152) on the second beam deflecting element (106) and thereafter on the fourth beam deflecting element (110);
wherein the superposition point (157) lies on a detection plane (126) of the detector (125) and an image is measured using the detector (125);
wherein the following steps are carried out for at least one optical path length difference ($\delta_t$) between the first interferometer arm (150) and the second interferometer arm (152) and for at least one wavelength ($\lambda_s$) which is emitted by the original image:

• creating a pixel raster (i, j) for the original image (156);
• creating a pixel raster (m, n) for the image;
• determining a matrix ($M_{m,n,t}$) which, for each of the pixels of the pixel raster (m, n) of the image, transforms a measured intensity ($\Phi_{m,n,t}$) of a pixel of the pixel raster (m, n) of the image into an intensity ($I_{i,j,s}$) of the pixel of the pixel raster (i, j) of the original image (156) by multiplying the measured intensity ($\Phi_{m,n,t}$) by the matrix ($M_{m,n,t}$);
• detecting intensities of pixels of the pixel raster (m, n) of a measured image; and
• calculating intensities of pixels of a pixel raster (i, j) of the original image (156) on the basis of the detected intensities of the pixels of the pixel raster (m, n) of the image.

2. Method according to claim 1,
   **characterized in that**
   at the superposition point (157), the wave vector component (164) of the first light beam (160), which is perpendicular to the first central beam (112), and the wave vector component (166) of the second light beam (162), which is perpendicular to the second central beam (118), are equal but in opposite directions.

3. Method according to claim 1,
   **characterized in that**
   at least one among the set consisting of the first beam deflecting element (104), the third beam deflecting element (108), the second beam deflecting element (106) and the fourth beam deflecting element (110) comprises at least one diffractive optical element (DOE), in particular a grating, and/or at least a first dielectric medium and/or a D-shaped mirror.

4. Method according to any one of the preceding claims,
   **characterized in that**

   the first beam deflecting element (104) is arranged in an arrangement plane which is spanned by the first beam deflecting element (104) and a plane perpendicular to an optical axis, wherein the optical axis, starting from the central image point (154), is defined by the angle bisector between the first central beam (112) and the second central beam (118),
   the second beam deflecting element (106) is arranged in such a way that the distance of the second beam deflecting element (106) from the arrangement plane is smaller than the distance of the second beam deflecting element (106) from the optical axis;
   the third beam deflecting element (108), the fourth beam deflecting element (110) and the superposition point (157) are arranged in such a way that the distance of the third beam deflecting element (108), of the fourth beam deflecting element (110) and of the superposition point (157) from the arrangement plane is in each case smaller than the distance of the third beam deflecting element (108) from the optical axis.

5. Method according to any one of the preceding claims,
   **characterized in that**

   the first beam deflecting element (104) is arranged in an arrangement plane which is spanned by the first beam deflecting element (104) and a plane perpendicular to an optical axis, wherein the optical axis, starting from the central image point (154), is defined by the angle bisector between the first central beam (112) and the second central beam (118),
   the second beam deflecting element (106) is arranged in such a way that a connecting line between the point of impingement of the first central beam (112) on the first beam deflecting element (104) and the point of impingement of the second central beam (118) on the second beam deflecting element (106) and the arrangement plane enclose an angle less than or equal to 30°;
   the third beam deflecting element (108) is arranged in such a way that the first central beam (112) between the first beam deflecting element (104) and the third beam deflecting element (108) and the arrangement plane enclose an angle less than or equal to 30°;
   the fourth beam deflecting element (110) is arranged in such a way that the second central beam (118) between the second beam deflecting element (106) and the fourth beam deflecting element (110) and the arrangement plane enclose an angle less than or equal to 30°;
   the third beam deflecting element (108) and the fourth beam deflecting element (110) are arranged in such a way that
   the connecting line between the point of impingement of the first central beam (112) on the third beam deflecting element (108) and the superposition point (157) and/or the connecting line between the point of impingement of the second central beam (118) on the fourth beam deflecting element (110) and the superposition point (157) each enclose with the arrangement plane an angle less than or equal to 30°.

6. Method according to any one of the preceding claims,
   **characterized in that**

   the optical imaging which transforms the first central beam prior to impingement on the first beam deflecting element (104) into the first central beam (112) after the impingement on the first beam deflecting element (104), and
   the optical imaging which transforms the second

**EP 3 183 535 B1**

central beam (118) prior to impingement on the second beam deflecting element (106) into the second central beam (118) after the impingement on the second beam deflecting element (106),

can be transformed into one another by a rotation through a rotation angle of between 150° and 210° about an axis of rotation and/or by a displacement along a displacement vector.

7. Method according to any one of the preceding claims,
**characterized in that**
the first beam deflecting element (104) and the second beam deflecting element (106) and/or the third beam deflecting element (108) and the fourth beam deflecting element (110) are contained in a single device.

8. Method according to any one of the preceding claims,
**characterized in that**
at least one beam splitter is arranged between the object (156) to be imaged on the one hand and the first interferometer arm (150) and the second interferometer arm (152) on the other hand.

9. Method according to any one of the preceding claims,
**characterized in that**
at least one beam combining device (176) is arranged between the third beam deflecting element (108) and the fourth beam deflecting element (110) on the one hand and the superposition point (157) on the other hand.

10. Method according to any one of the preceding claims,
**characterized in that**
at least one among the set consisting of the first beam deflecting element (104), the third beam deflecting element (108), the second beam deflecting element (106) and the fourth beam deflecting element (110) comprises at least one D-shaped mirror,
wherein the at least one D-shaped mirror comprises:

a second dielectric medium having a light incidence surface and a refractive index greater than 1.3, and
at least two mirror elements arranged downstream of the light incidence surface for deflecting the light beam into a light beam exiting from the at least one D-shaped mirror,
wherein the mirror elements are each arranged adjacent to one another,
wherein the mirror elements each have a flat reflective surface,
wherein the second dielectric medium completely fills a space between the reflective surfaces of the mirror elements and the light incidence surface, and
wherein the mirror elements have a size greater than 0.1 mm.

11. Method according to any one of the preceding claims,
**characterized in that**
the first interferometer arm (150) and/or the second interferometer arm (152) has a device for changing an optical path of the interferometer arm (150,152) in question.

12. Method for calibrating an interferometer (100),

wherein the interferometer (100) is a lensless three-dimensional interferometer (100), comprising:

• a first interferometer arm (150) including a first beam deflecting element (104) and a third beam deflecting element (108),
• a second interferometer arm (152) including a second beam deflecting element (106) and a fourth beam deflecting element (110);
• and a detector (125);

wherein an original image (156) emits light of at least one wavelength ($\lambda_s$), wherein a first central beam (112) and a second central beam (118) originate from a central image point (154) of the original image (156) and a first light beam (160) and a second light beam (162) originate from an image point (158) of the original image (156);
wherein the first central beam (112) and the first light beam (160) pass through the first interferometer arm (150) and the second central beam (118) and the second light beam (162) pass through the second interferometer arm (152);
wherein, after passing through the first or second interferometer arm (150, 152), the first central beam (112) and the second central beam (118) are superimposed, the directions of propagation of the first central beam (112) and the second central beam (118) being identical, and generate a $k_{perpendicular}=0$ interference at a superposition point (157) of the first central beam (112) and the second central beam (118), a $k_{perpendicular}=0$ interference being an interference between the first central beam (112) and the second central beam (118) in which the wave vectors of the first central beam (112) and the second central beam (118) have the same direction;
wherein, after passing through the first or second interferometer arm (150, 152), the first light beam (160) and the second light beam (162) overlap at the superposition point (157) of the first central beam (112) and the second central beam (118), the directions of propagation of the first light beam (160) and the second light beam (162) not being identical;

wherein, at the superposition point (157), a wave vector component (164) of the first light beam (160), which is perpendicular to the first central beam (112), and a wave vector component (166) of the second light beam (162), which is perpendicular to the second central beam (118), are opposed;

wherein the first central beam (112) and the first light beam (160) impinge in the first interferometer arm (150) on the first beam deflecting element (104) and thereafter on the third beam deflecting element (108), and the second central beam (118) and the second light beam (162) impinge in the second interferometer arm (152) on the second beam deflecting element (106) and thereafter on the fourth beam deflecting element (110);

wherein the superposition point (157) lies on a detection plane (126) of the detector (125) and an image is measured using the detector (125);

wherein the following steps are carried out for at least one optical path length difference ($\delta_t$) between the first interferometer arm (150) and the second interferometer arm (152) and for at least one wavelength ($\lambda_s$) which is emitted by the original image:

- • creating a pixel raster (i, j) for the original image (156);
- • creating a pixel raster (m, n) for the image;
- • successively generating a light-emitting pixel of the pixel raster of the original image (156) with a normal intensity, the remaining pixels being dark, for each individual pixel of the pixel raster of the original image (156);
- • for each light-emitting pixel of the pixel raster of the original image (156): detecting intensities ($\Phi_{m,n,t}(i,j,s)$) of the pixel raster (m, n) of the image using the detector (125); and
- • determining a matrix ($M_{m,n,t}$) which, for each of the pixels of the pixel raster (m, n) of the image, transforms a measured intensity ($\Phi_{m,n,t}$) of a pixel of the pixel raster (m, n) of the image into an intensity ($I_{i,j,s}$) of the pixel of the pixel raster (i, j) of the original image (156) by multiplying the measured intensity ($\Phi_{m,n,t}$) by the matrix ($M_{m,n,t}$).

## Revendications

**1.** Procédé de reconstruction d'une image originale (156) avec un interféromètre (100),

où l'interféromètre (100) est un interféromètre tridimensionnel sans lentille (100), comprenant :

- un premier bras d'interféromètre (150) comportant un premier élément de déviation de faisceau (104) et un troisième élément de déviation de faisceau (108),
- un deuxième bras d'interféromètre (152) comportant un deuxième élément de déviation de faisceau (106) et un quatrième élément de déviation de faisceau (110) ;
- et un détecteur (125) ;

où l'image originale (156) émet une lumière d'au moins une longueur d'onde ($\lambda_s$), un premier faisceau central (112) et un deuxième faisceau central (118) partant d'un point d'image central (154) de l'image originale (156) et un premier faisceau lumineux (160) et un deuxième faisceau lumineux (162) partant d'un point d'image (158) de l'image originale (156) ;

où le premier faisceau central (112) et le premier faisceau lumineux (160) traversent le premier bras d'interféromètre (150), et le deuxième faisceau central (118) et le deuxième faisceau lumineux (162) traversent le deuxième bras d'interféromètre (152) ;

où le premier faisceau central (112) et le deuxième faisceau central (118) sont superposés après avoir traversé respectivement le premier et le deuxième bras d'interféromètre (150, 152), la direction de propagation du premier faisceau central (112) étant identique à celle du deuxième faisceau central (118), et génèrent une interférence $_{kperpendiculaire}=0$ en un point de superposition (157) du premier faisceau central (112) et du deuxième faisceau central (118), une interférence $_{kperpendiculaire}=0$ étant une interférence du premier faisceau central (112) et du deuxième faisceau central (118) où les vecteurs d'onde du premier faisceau central (112) et du deuxième faisceau central (118) ont la même direction ;

où, après avoir traversé respectivement le premier et le deuxième bras d'interféromètre (150, 152), le premier faisceau lumineux (160) et le deuxième faisceau lumineux (162) se chevauchent au point de superposition (157) du premier faisceau central (112) et du deuxième faisceau central (118), la direction de propagation du premier faisceau lumineux (160) n'étant pas identique à celle du deuxième faisceau lumineux (162) ;

où, au point de superposition (157), une composante de vecteur d'onde (164) du premier faisceau lumineux (160) perpendiculaire au premier faisceau central (112) et une composante de vecteur d'onde (166) du deuxième faisceau lumineux (162) perpendiculaire au deuxième faisceau central (118) sont opposées ;

où le premier faisceau central (112) et le premier faisceau lumineux (160) rencontrent le premier élément de déviation de faisceau (104) dans le premier bras d'interféromètre (150), puis le troisième élément de déviation de faisceau (108), et le deuxième faisceau central (118) et le deuxième faisceau lumineux (162) rencontrent le deuxième élément de déviation de faisceau (106) dans le deuxième bras d'interféromètre (152), puis le quatrième élément de déviation de faisceau (110) ;

où le point de superposition (157) est situé sur un plan de détection (126) du détecteur (125), et une image est mesurée avec le détecteur (125) ;

où les étapes suivantes sont exécutées pour au moins une différence de longueur de trajet optique ($\delta_t$) entre le premier bras d'interféromètre (150) et le deuxième bras d'interféromètre (152) et pour au moins une longueur d'onde ($\lambda_s$) émise par l'image originale :

- création d'une trame de pixels (i, j) pour l'image originale (156) ;
- création d'une trame de pixels (m, n) pour l'image ;
- détermination d'une matrice ($M_{m,n,t}$) qui, pour chaque pixel de la trame de pixels (m, n) de l'image, transforme une intensité mesurée ($\phi_{m,n,t}$) d'un pixel de la trame de pixels (m, n) de l'image par multiplication de l'intensité mesurée ($\phi_{m,n,t}$) par la matrice ($M_{m,n,t}$) en une intensité ($I_{i,j,s}$) des pixels de la trame de pixels (i, j) de l'image originale (156) ;
- détection des intensités des pixels de la trame de pixels (m, n) d'une image mesurée ; et
- calculer des intensités de pixels d'une trame de pixels (i, j) de l'image originale (156) sur la base des intensités détectées des pixels de la trame de pixels (m, n) de l'image.

2. Procédé selon la revendication 1, **caractérisé**
   **en ce qu'**au niveau du point de superposition (157), la composante vectorielle d'onde (164) du premier faisceau lumineux (160) perpendiculaire au premier faisceau central (112) et la composante vectorielle d'onde (166) du deuxième faisceau lumineux (162) perpendiculaire au deuxième faisceau central (118) sont de grandeur égale dans des directions opposées.

3. Procédé selon la revendication 1, **caractérisé**
   **en ce qu'**au moins un élément dans l'ensemble constitué par le premier élément de déviation de faisceau (104), le troisième élément de déviation de faisceau (108), le deuxième élément de déviation de faisceau (106) et le quatrième élément de déviation de faisceau (110) comprend au moins un élément optique diffractif (DOE), en particulier un réseau, et/ou au moins un premier milieu diélectrique et/ou un miroir D.

4. Procédé selon l'une des revendications précédentes, **caractérisé**

   **en ce que** le premier élément de déviation de faisceau (104) est disposé dans un plan de dispositif défini par le premier élément de déviation de faisceau (104) et un plan perpendiculaire à un axe optique, ledit axe optique étant donné par la bissectrice entre le premier faisceau central (112) et le deuxième faisceau central (118) à partir du point d'image central (154),
   le deuxième élément de déviation de faisceau (106) est disposé de sorte que la distance entre ledit deuxième élément de déviation de faisceau (106) et le plan de dispositif est inférieure à la distance entre le deuxième élément de déviation de faisceau (106) et l'axe optique ;
   le troisième élément de déviation de faisceau (108), le quatrième élément de déviation de faisceau (110) et le point de superposition (157) sont disposés de sorte que les distances respectives entre le troisième élément de déviation de faisceau (108), le quatrième élément de déviation de faisceau (110) et le point de superposition (157) d'une part, et le plan de dispositif d'autre part, sont inférieures à la distance entre le troisième élément de déviation de faisceau (108) et l'axe optique.

5. Procédé selon l'une des revendications précédentes, **caractérisé**

   **en ce que** le premier élément de déviation de faisceau (104) est disposé dans un plan de dispositif défini par le premier élément de déviation de faisceau (104) et un plan perpendiculaire à un axe optique, ledit axe optique étant donné par la bissectrice entre le premier faisceau central (112) et le deuxième faisceau central (118) à partir du point d'image central (154),
   le deuxième élément de déviation de faisceau (106) est disposé de sorte qu'une ligne de jonction entre le point d'incidence du premier faisceau central (112) sur le premier élément de déviation de faisceau (104) et le point d'incidence du deuxième faisceau central (118) sur le deuxième élément de déviation de faisceau (106) et le plan de dispositif forment un angle inférieur ou égal à 30° ; le troisième élément de déviation de faisceau (108) est disposé de sorte que le premier faisceau central (112) entre le premier élément de déviation de faisceau (104) et le troisième élément de déviation de faisceau (108) et le plan de dispositif forment un angle inférieur ou égal à 30° ;

le quatrième élément de déviation de faisceau (110) est disposé de sorte que le deuxième faisceau central (118) entre le deuxième élément de déviation de faisceau (106) et le quatrième élément de déviation de faisceau (110) et le plan de dispositif forment un angle inférieur ou égal à 30° ;

le troisième élément de déviation de faisceau (108) et le quatrième élément de déviation de faisceau (110) sont disposés de sorte que la ligne de jonction entre le point d'incidence du premier faisceau central (112) sur le troisième élément de déviation de faisceau (108) et le point de superposition (157) et/ou la ligne de jonction entre le point d'incidence du deuxième faisceau central (118) sur le quatrième élément de déviation de faisceau (110) et le point de superposition (157) forment chacune un angle inférieur ou égal à 30° avec le plan de dispositif.

6. Procédé selon l'une des revendications précédentes, **caractérisé**

   **en ce que** l'image optique qui convertit le premier faisceau central avant incidence sur le premier élément de déviation de faisceau (104) en premier faisceau central (112) après incidence sur le premier élément de déviation de faisceau (104), et

   l'image optique, qui convertit le deuxième faisceau central (118) avant incidence sur le deuxième élément de déviation de faisceau (106) en deuxième faisceau central (118) après incidence sur le deuxième élément de déviation de faisceau (106),

   peuvent être converties l'une en l'autre par rotation suivant un angle de rotation compris entre 150° et 210° autour d'un axe de rotation et/ou par translation le long d'un vecteur de déplacement.

7. Procédé selon l'une des revendications précédentes, **caractérisé**

**en ce que** le premier élément de déviation de faisceau (104) et le deuxième élément de déviation de faisceau (106) et/ou le troisième élément de déviation de faisceau (108) et le quatrième élément de déviation de faisceau (110) sont contenus dans un seul dispositif.

8. Procédé selon l'une des revendications précédentes, **caractérisé** **en ce qu'**au moins un séparateur de faisceau est disposé entre l'objet à représenter (156) d'une part, et le premier bras d'interféromètre (150) et le deuxième bras d'interféromètre (152) d'autre part.

9. Procédé selon l'une des revendications précédentes, **caractérisé** **en ce qu'**au moins un dispositif (176) de combinaison de faisceaux est disposé entre le troisième élément de déviation de faisceau (108) et le quatrième élément de déviation de faisceau (110) d'une part, et le point de superposition (157) d'autre part.

10. Procédé selon l'une des revendications précédentes, **caractérisé** **en ce qu'**au moins un élément constitué par le premier élément de déviation de faisceau (104), le troisième élément de déviation de faisceau (108), le deuxième élément de déviation de faisceau (106) et le quatrième élément de déviation de faisceau (110) comprend au moins un miroir D, ledit au moins un miroir D comprenant :

   un deuxième milieu diélectrique ayant une surface d'incidence de la lumière et un indice de réfraction supérieur à 1,3, et au moins deux éléments de miroir disposés en aval de la surface d'incidence de la lumière pour dévier le faisceau lumineux en un faisceau lumineux sortant dudit au moins un miroir D, les éléments de miroir étant disposés de manière adjacente les uns aux autres, les éléments de miroir présentant chacun une surface réfléchissante plane, le deuxième milieu diélectrique comblant complètement un espace entre les surfaces réfléchissantes des éléments de miroir et la surface d'incidence de la lumière, et les éléments de miroir présentant une extension supérieure à 0,1 mm.

11. Procédé selon l'une des revendications précédentes, **caractérisé** **en ce que** le premier bras d'interféromètre (150) et/ou le deuxième bras d'interféromètre (152) comprennent un dispositif pour modifier un chemin optique du bras d'interféromètre (150, 152) correspondant.

12. Procédé d'étalonnage d'un interféromètre (100),

où l'interféromètre (100) est un interféromètre tridimensionnel sans lentille (100), comprenant :

- un premier bras d'interféromètre (150) comportant un premier élément de déviation de faisceau (104) et un troisième élément de déviation de faisceau (108),
- un deuxième bras d'interféromètre (152) comportant un deuxième élément de déviation de faisceau (106) et un quatrième élément de déviation de faisceau (110) ;
- et un détecteur (125) ;

où une image originale (156) émet une lumière d'au moins une longueur d'onde ($\lambda_s$), un premier faisceau central (112) et un deuxième faisceau central (118) partant d'un point d'image central (154) de l'image originale (156) et un premier faisceau lumineux (160) et un deuxième faisceau lumineux (162) partant d'un point d'image (158) de l'image originale (156) ;

où le premier faisceau central (112) et le premier faisceau lumineux (160) traversent le premier bras d'interféromètre (150), et le deuxième faisceau central (118) et le deuxième faisceau lumineux (162) traversent le deuxième bras d'interféromètre (152) ;

où le premier faisceau central (112) et le deuxième faisceau central (118) sont superposés après avoir traversé respectivement le premier et le deuxième bras d'interféromètre (150, 152), la direction de propagation du premier faisceau central (112) étant identique à celle du deuxième faisceau central (118), et génèrent une interférence $_{kperpendiculaire}=0$ en un point de superposition (157) du premier faisceau central (112) et du deuxième faisceau central (118), une interférence $_{kperpendiculaire}=0$ étant une interférence du premier faisceau central (112) et du deuxième faisceau central (118) où les vecteurs d'onde du premier faisceau central (112) et du deuxième faisceau central (118) ont la même direction ;

où, après avoir traversé respectivement le premier et le deuxième bras d'interféromètre (150, 152), le premier faisceau lumineux (160) et le deuxième faisceau lumineux (162) se chevauchent au point de superposition (157) du premier faisceau central (112) et du deuxième faisceau central (118), la direction de propagation du premier faisceau lumineux (160) n'étant pas identique à celle du deuxième faisceau lumineux (162) ;

où, au point de superposition (157), une composante de vecteur d'onde (164) du premier faisceau lumineux (160) perpendiculaire au premier faisceau central (112) et une composante de vecteur d'onde (166) du deuxième faisceau lumineux (162) perpendiculaire au deuxième faisceau central (118) sont opposées ;

où le premier faisceau central (112) et le premier faisceau lumineux (160) rencontrent le premier élément de déviation de faisceau (104) dans le premier bras d'interféromètre (150), puis le troisième élément de déviation de faisceau (108), et le deuxième faisceau central (118) et le deuxième faisceau lumineux (162) rencontrent le deuxième élément de déviation de faisceau (106) dans le deuxième bras d'interféromètre (152), puis le quatrième élément de déviation de faisceau (110) ;

où le point de superposition (157) est situé sur un plan de détection (126) du détecteur (125), et une image est mesurée avec le détecteur (125) ;

où les étapes suivantes sont exécutées pour au moins une différence de longueur de trajet optique ($\delta_t$) entre le premier bras d'interféromètre (150) et le deuxième bras d'interféromètre (152) et pour au moins une longueur d'onde ($\lambda_s$) émise par l'image originale :

- création d'une trame de pixels (i, j) pour l'image originale (156) ;
- création d'une trame de pixels (m, n) pour l'image ;
- génération successive d'un pixel lumineux de la trame de pixels de l'image originale (156) avec une intensité normalisée, les pixels restants étant sombres, pour chaque pixel individuel de la trame de pixels de l'image originale (156)
- pour chaque pixel lumineux de la trame de pixels de l'image originale (156) : détection des intensités ($\phi_{m,n,t}$ (i,j,s)) de la trame de pixels (m,n) de l'image avec le détecteur (125) ; et
- détermination d'une matrice ($M_{m,n,t}$) qui, pour chaque pixel de la trame pixels (m, n) de l'image, transforme une intensité mesurée ($\phi_{m,n,t}$) d'un pixel de la trame de pixels (m, n) de l'image par multiplication de l'intensité mesurée ($\phi_{m,n,t}$) par la matrice ($M_{m,n,t}$) en une intensité ($I_{i,j,s}$) des pixels de la trame de pixels (i, j) de l'image originale (156).

Fig. 1a

Fig. 1b

Fig. 2

Fig. 3

Fig. 4a

Fig. 4b

Fig. 4c

Fig. 5a

Fig. 5b

Fig. 5c

EP 3 183 535 B1

Fig. 6

EP 3 183 535 B1

Fig. 7

Fig. 8

EP 3 183 535 B1

Fig. 9b

Fig. 9a

**EP 3 183 535 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8693001 B2
- US 7499174 B2
- WO 2008052405 A1
- DE 102013101856